# EUROPEAN PATENT APPLICATION

(11) **EP 3 483 745 A1**
(43) Date of publication of application: **15.05.2019**
(21) Application number: 16909268.1
(22) Date of filing: 22.07.2016
(51) Int. Cl.: G06F 17/27

(54) **METHOD AND TERMINAL DEVICE FOR PRESENTING CANDIDATE ITEM**

(71) Applicant: Huawei Technologies Co., Ltd., Longgang District Shenzhen, Guangdong 518129 (CN)
(72) Inventor: ZHANG, Yue, Shenzhen Guangdong 518129 (CN); ZHENG, Weibin, Shenzhen Guangdong 518129 (CN); LI, Dawei, Shenzhen Guangdong 518129 (CN); HE, Zhen, Shenzhen Guangdong 518129 (CN)
(74) Representative: Gill Jennings & Every LLP
(86) International application number: PCT/CN2016/091036
(87) International publication number: WO 2018/014341

(57) **Abstract**

The present invention provides a candidate-item presentation method and a terminal device. The method is applied to a scenario in which a user enters information by using an input method. The method includes: determining that the input method is triggered, and obtaining preceding information in a target application, where the target application is an application that is currently in an active process state; parsing the preceding information to determine an action type corresponding to the preceding information; determining, based on the action type, a candidate item corresponding to the input method, where the candidate item includes a candidate word and/or a candidate operation; and presenting the candidate item to a user. Therefore, more abundant candidate items that are more applicable to a current input scenario can be determined by making full use of environment information, and the method is applicable to a particular scenario. This provides more accurate candidate items and improves efficiency of entering information by a user by using an input method.

## Description

### TECHNICAL FIELD

Embodiments of the present invention relate to the technical field of input methods, and more specifically, to a candidate-item presentation method and a terminal device.

### BACKGROUND

An input method, as a necessary condition for character input of a mobile phone, is becoming an increasingly important tool in user communication. Almost all current input methods are user-based instant input that is implemented by querying a built-in dictionary to retrieve a corresponding character and supporting word association by using an N-element grammar (N Grammar, "N-gram" for short) voice model. N-gram is a language model used frequently in continuous speech recognition of large vocabularies. The model is based on an assumption that occurrence of an N^{th} word is related only to preceding N-1 words, and is not related to any other words. An occurrence probability of an entire sentence is a product of occurrence probabilities of all words. The probability can be obtained by directly counting, in a corpus, a quantity of times for which N words occur simultaneously.

In an existing input technology, using a pinyin input method as an example, after the input method is triggered, "words used frequently at the beginning" with a relatively high frequency are used by default when a user does not enter any information, for example, "We" and "Today" serve as candidate words. After the user has submitted some words, before new pinyin is entered, a candidate-word list may be changed by moving a cursor position. In this input method, a default candidate word is static, remains unchanged in any situation, and is not applicable to a particular scenario. This leads to relatively low accuracy.

### SUMMARY

This application provides a candidate-item presentation method and a terminal device, to determine, by making full use of input environment information, more abundant candidate items that are more applicable to a current input scenario, and improve efficiency of entering information by a user by using an input method.

According to a first aspect, a candidate-item presentation method is provided. The method is applied to a scenario in which a user enters information by using an input method. The method includes: determining that the input method is triggered, and obtaining preceding information in a target application, where the target application is an application that is currently in an active process state; parsing the preceding information to determine an action type corresponding to the preceding information; determining, based on the action type, a candidate item corresponding to the input method, where the candidate item includes a candidate word and/or a candidate operation; and presenting the candidate item to a user.

The candidate word may include a single character or a plurality of characters. For example, a language of the input method is Chinese, and the candidate word may include a single Chinese character, a word including a plurality of Chinese characters, a phrase including a plurality of Chinese characters, a sentence including a plurality of Chinese characters, or the like. This is not limited in this embodiment of the present invention.

Therefore, according to the candidate-item presentation method in this embodiment of this application, when the input method is triggered, a terminal device can provide, for the user based on related information of the application that is currently in the active process state, a candidate item displayed during input. In this way, more abundant candidate items that are more applicable to a current input scenario can be determined by making full use of input environment information, and efficiency of entering information by the user by using the input method can be improved.

It can be understood that preceding information in an application may be information that is used by the terminal device to determine a current semantic environment of the input method. For example, the preceding information in the application may be text content of a short message including a verification code, a to-be-replied text, identification information of the application, identification information of a textbox of the application, identification information of the application, identification information of a chat object, or the like. The preceding information in the application may alternatively be a candidate word that is determined by the application and that needs to be provided for the user by the input method.

Optionally, there is an application programming interface (Application Program Interface, "API" for short) in an input framework of an operating system of the terminal device. The application of the terminal device transfers the preceding information in the application to an intelligent input module of the terminal device by using the API. The intelligent input module caches the preceding information transmitted by the application, performs a series of processing operations on the preceding information to obtain a candidate item corresponding to the preceding information in the application, and provides the candidate item for the user.

With reference to the first aspect, in a first possible implementation of the first aspect, the parsing the preceding information to determine an action type corresponding to the preceding information includes: obtaining a keyword in the preceding information; and determining, based on the keyword and a preset correspondence, the action type corresponding to the preceding information, where the correspondence includes a correspondence between the keyword and the action type.

Optionally, the correspondence between the keyword and the action type is pre-stored in the terminal device. After parsing the preceding information, the terminal device directly determines, based on the correspondence between the keyword and the action type, the action type corresponding to the preceding information.

Optionally, the terminal device may alternatively use a regular matching manner and/or a machine learning algorithm to perform matching on the preceding information. The machine learning algorithm includes but is not limited to a support vector machine algorithm, a logistic regression algorithm, and a neural network algorithm. When matching is performed on the preceding information in a regular matching manner, a correspondence between a regular expression and an action type may be preset. After determining a regular expression corresponding to the preceding information in the application, the terminal device determines, based on the correspondence between a regular expression and an action type, an action type corresponding to the preceding information.

With reference to the first aspect or the first possible implementation of the first aspect, in a second possible implementation of the first aspect, the determining, based on the action type, a candidate item corresponding to the input method includes: executing an action corresponding to the action type; and determining information obtained by executing the action as the candidate item corresponding to the input method.

With reference to the second possible implementation of the first aspect, in a third possible implementation of the first aspect, the executing an action corresponding to the action type includes: presenting indication information to the user, where the indication information is used by the user to choose whether to trigger the action; and executing the action when it is determined that the user triggers the action.

Optionally, the presenting indication information to the user may be implemented in a form of a prompt box. An action of triggering the action may be sliding the prompt box or tapping the prompt box. In addition, a time threshold may be preset. If the user does not trigger the action within the preset time threshold, the action is not executed.

Alternatively, the indication information includes two options: "Yes" and "No". When the user taps "Yes", it is determined that the user triggers the action; or when the user taps "No", it is determined that the user does not trigger the action.

With reference to the first aspect or the first possible implementation of the first aspect, in a fourth possible implementation of the first aspect, the preceding information includes a verification code, and the action type is filling with the verification code; and the determining, based on the action type, a candidate item corresponding to the input method includes: determining the verification code as the candidate item corresponding to the input method.

Optionally, the preceding information is text content of a short message including the verification code. The text content includes the verification code. When it is determined that the action type is filling with the verification code, the terminal device presents the verification code to the user as the candidate item, so that the user enters the verification code. This can be used in any type of verification code filling scenarios, and improve user experience.

With reference to the first aspect or the first possible implementation of the first aspect, in a fifth possible implementation of the first aspect, the preceding information includes a to-be-replied text, and the action type is invoking an application used to respond to the to-be-replied text; and the determining, based on the action type, a candidate item corresponding to the input method includes: determining a shortcut entry of the application used to respond to the to-be-replied text, as the candidate item corresponding to the input method.

With reference to the first aspect or the first possible implementation of the first aspect, in a sixth possible implementation of the first aspect, the preceding information includes a to-be-replied text, and the action type is invoking a fast reply template; and the determining, based on the action type, a candidate item corresponding to the input method includes: performing semantic parsing on the to-be-replied text to determine a candidate word library, where the candidate word library includes a frequently used reply word; and determining a preset quantity of words ranking ahead in the candidate word library, as the candidate item corresponding to the input method.

With reference to the sixth possible implementation of the first aspect, in a seventh possible implementation of the first aspect, after the presenting the candidate item to the user, the method further includes: determining whether a target word entered by the user is in the candidate word library; and raising a rank of the target word in the candidate word library when it is determined that the target word entered by the user is in the candidate word library; or adding the target word to the candidate word library when it is determined that the target word entered by the user is not in the candidate word library.

Optionally, when the target word entered by the user is a word in the candidate word library, frequency of the target word may increase by 1, and a rank of the target word in the candidate word library is raised; or when the target word entered by the user is not a word in the candidate word library, the target word is added to the candidate word library, and frequency of the target word is set to 1.

With reference to the second or the third possible implementation of the first aspect, in an eighth possible implementation of the first aspect, the target application is a chat application, the preceding information includes a to-be-replied text, and the action type is extracting content of a source text; and the executing an action corresponding to the action type, and determining information obtained by executing the action as the candidate item corresponding to the input method includes: extracting a keyword in the to-be-replied text; and determining the keyword as the candidate item corresponding to the input method.

Optionally, a keyword extraction rule may be preset. For example, a proper noun such as a personal name, a place name, an organization name, a movie name, or a time word may serve as a keyword.

With reference to the third or the fourth possible implementation of the first aspect, in a ninth possible implementation of the first aspect, the action type is querying data; and the executing an action corresponding to the action type, and determining information obtained by executing the action as the candidate item corresponding to the input method includes: executing a data query action to obtain data corresponding to the preceding information; and determining the data corresponding to the preceding information as the candidate item corresponding to the input method.

Optionally, the querying data includes querying offline data and querying cloud data. The offline data includes but is not limited to a system-level application and a statistical database. The system-level application may be, for example, a schedule, a clock, a memo, or a contact. The statistical database may be, for example, frequently used replies, nicknames of contacts, and historical search records. The cloud data includes but is not limited to geographical location information, weather information, hit movies, TV series query, competition information, route information, flight information, encyclopedic information, discount order information, travel route information, information about a nearby merchant, and the like.

With reference to the ninth possible implementation of the first aspect, in a tenth possible implementation of the first aspect, the preceding information includes identification information of the target application and identification information of a search box in the target application; and the executing a data query action to obtain data corresponding to the preceding information includes: querying whether there is a historical search record that is corresponding to the identification information of the target application and the identification information of the search box in the target application; and when it is determined that there is the historical search record, obtaining a preset quantity of historical search words ranking ahead in the historical search record.

Optionally, when a search word entered by the user is a search word in the historical search record, a rank of the search word entered by the user in the historical search record is raised. For example, frequency of the search word entered by the user may increase by 1. When a search word entered by the user is not a search word in the historical search record, the search word entered by the user is added to the historical search record, and frequency of the search word entered by the user is set to 1.

With reference to the ninth possible implementation of the first aspect, in an eleventh possible implementation of the first aspect, the target application is a chat application, and the preceding information includes identification information of the target application and identification information of a chat object; and the executing a data query action to obtain data corresponding to the preceding information includes: querying whether there are addressing terms that are corresponding to the identification information of the target application and the identification information of the chat object; and when it is determined that there are the addressing terms, obtaining a preset quantity of addressing terms ranking ahead in the addressing terms.

Optionally, the preceding information further includes an addressing word corresponding to the identification information of the chat object. When determining, based on the preceding information, a to-be-executed action is querying data, the terminal device searches locally to determine whether there are addressing words that are corresponding to the identification information of the target application and the identification information of the chat object. If there are the addressing words, frequency of each of the addressing words corresponding to the identification information of the target application and the identification information of the chat object increases by 1. If there are no addressing words, the addressing word in the preceding information is stored, and frequency of the stored addressing word in the preceding information is set to 1.

In the foregoing possible implementations, after the user manually enters some texts, the preceding information may alternatively be a pinyin string and a to-be-replied text that have been entered. The to-be-replied text may be split into word sequences, and the word sequences are converted into a correspondence between a pinyin string and a word group to serve as an implicit candidate word. When the user enters a new pinyin string, a word group corresponding to the pinyin string entered by the user is preferentially selected from the implicit candidate word as the candidate word.

According to a second aspect, a candidate-item presentation method is provided. The method is applied to a scenario in which a user enters information by using an input method. The method includes: displaying an application conversation interface; displaying an input method interface; displaying conversation information on the application conversation interface; responding to the conversation information, and displaying a candidate item in an input method candidate area, where the candidate item includes a candidate word and/or a candidate operation; and responding to selection performed by the user on the candidate item.

Therefore, according to the candidate-item presentation method in this application, in response to the conversation information displayed on the application conversation interface, the candidate item is displayed in the input method candidate area. In this way, a candidate item that is more applicable to a current input scenario can be determined and provided for the user, and efficiency of entering information by the user by using the input method can be improved.

With reference to the second aspect, in a first possible implementation of the second aspect, the responding to the conversation information, and displaying a candidate item in an input method candidate area includes: parsing the conversation information to determine an action type corresponding to the conversation information; determining, based on the action type, a candidate item corresponding to the input method; and displaying the candidate item in the input method candidate area.

With reference to the first possible implementation of the second aspect, in a second possible implementation of the second aspect, the parsing the conversation information to determine an action type corresponding to the conversation information includes: obtaining a keyword in the conversation information; and determining, based on the keyword and a preset correspondence, the action type corresponding to the conversation information. The correspondence includes a correspondence between the keyword and the action type.

With reference to the first or the second possible implementation of the second aspect, in a third possible implementation of the second aspect, the determining, based on the action type, a candidate item corresponding to the input method includes: executing an action corresponding to the action type; and determining information obtained by executing the action as the candidate item corresponding to the input method.

With reference to the third possible implementation of the second aspect, in a fourth possible implementation of the second aspect, the executing an action corresponding to the action type includes: displaying indication information, where the indication information is used by the user to choose whether to trigger the action; and executing the action when it is determined that the user triggers the action.

With reference to the first or the second possible implementation of the second aspect, in a fifth possible implementation of the second aspect, the conversation information includes a verification code, and the action type is filling with the verification code. The determining, based on the action type, a candidate item corresponding to the input method includes: determining the verification code as the candidate item corresponding to the input method.

With reference to the first or the second possible implementation of the second aspect, in a sixth possible implementation of the second aspect, the conversation information includes a to-be-replied text, and the action type is invoking an application used to respond to the to-be-replied text; and the determining, based on the action type, a candidate item corresponding to the input method includes: determining a shortcut entry of the application used to respond to the to-be-replied text, as the candidate item corresponding to the input method.

With reference to the first or the second possible implementation of the second aspect, in a seventh possible implementation of the second aspect, the conversation information includes a to-be-replied text, and the action type is invoking a fast reply template; and the determining, based on the action type, a candidate item corresponding to the input method includes: performing semantic parsing on the to-be-replied text to determine a candidate word library, where the candidate word library includes a frequently used reply word; and determining a preset quantity of words ranking ahead in the candidate word library, as the candidate item corresponding to the input method.

With reference to the seventh possible implementation of the second aspect, in an eighth possible implementation of the second aspect, after the responding to selection performed by the user on the displayed candidate item, the method further includes: determining whether a target word entered by the user is in the candidate word library; and raising a rank of the target word in the candidate word library when it is determined that the target word entered by the user is in the candidate word library; or adding the target word to the candidate word library when it is determined that the target word entered by the user is not in the candidate word library.

With reference to the third or the fourth possible implementation of the second aspect, in a ninth possible implementation of the second aspect, the target application is a chat application, the conversation information includes a to-be-replied text, and the action type is extracting content of a source text; and the executing an action corresponding to the action type, and determining information obtained by executing the action as the candidate item corresponding to the input method includes: extracting a keyword in the to-be-replied text; and determining the keyword as the candidate item corresponding to the input method.

With reference to the third or the fourth possible implementation of the second aspect, in a tenth possible implementation of the second aspect, the action type is querying data; and the executing an action corresponding to the action type, and determining information obtained by executing the action as the candidate item corresponding to the input method includes: executing a data query action to obtain data corresponding to the conversation information; and determining the data corresponding to the conversation information as the candidate item corresponding to the input method.

With reference to the tenth possible implementation of the second aspect, in an eleventh possible implementation of the second aspect, the conversation information includes identification information of the target application and identification information of a search box in the target application; and the executing a data query action to obtain data corresponding to the conversation information includes: querying whether there is a historical search record that is corresponding to the identification information of the target application and the identification information of the search box in the target application; and when it is determined that there is the historical search record, obtaining a preset quantity of historical search words ranking ahead in the historical search record.

With reference to the tenth possible implementation of the second aspect, in a twelfth possible implementation of the second aspect, the target application is a chat application, and the conversation information includes identification information of the target application and identification information of a chat object; and the executing a data query action to obtain data corresponding to the conversation information includes: querying whether there are addressing terms that are corresponding to the identification information of the target application and the identification information of the chat object; and when it is determined that there are the addressing terms, obtaining a preset quantity of addressing terms ranking ahead in the addressing terms.

It can be understood that specific implementation of related operations in the possible implementations of the second aspect is the same as specific implementation of corresponding related operations in the possible implementations of the first aspect.

According to a third aspect, a terminal device is provided, to perform the method in any one of the first aspect or the possible implementations of the first aspect. Specifically, the terminal device includes function modules configured to perform the method in any one of the first aspect or the possible implementations of the first aspect.

According to a fourth aspect, a terminal device is provided, to perform the method in any one of the second aspect or the possible implementations of the second aspect. Specifically, the terminal device includes function modules configured to perform the method in any one of the second aspect or the possible implementations of the second aspect.

According to a fifth aspect, a terminal device is provided, including a processor, a memory, and a display. The processor, the memory, and the display are connected by using a bus system. The memory is configured to store an instruction. The processor is configured to invoke the instruction stored in the memory, to control the display to display information and enable the terminal device to perform the method in any one of the first aspect or the possible implementations of the first aspect.

According to a sixth aspect, a terminal device is provided, including a processor, a memory, and a display. The processor, the memory, and the display are connected by using a bus system. The memory is configured to store an instruction. The processor is configured to invoke the instruction stored in the memory, to control the display to display information and enable the terminal device to perform the method in any one of the second aspect or the possible implementations of the second aspect.

According to a seventh aspect, a computer readable medium is provided, and is configured to store a computer program. The computer program includes an instruction used to perform the method in any one of the first aspect or the possible implementations of the first aspect.

According to an eighth aspect, a computer readable medium is provided, and is configured to store a computer program. The computer program includes an instruction used to perform the method in any one of the second aspect or the possible implementations of the second aspect.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of an application scenario according to an embodiment of the present invention;
FIG. 2(a) and FIG. 2(b) are schematic diagrams of associating a contact candidate-item by an SMS application in the prior art;
FIG. 3 is a schematic block diagram of a terminal device according to an embodiment of the present invention;
FIG. 4 is a schematic block diagram of an intelligent input module of a terminal device according to an embodiment of the present invention;
FIG. 5 is a schematic flowchart of a candidate-item presentation method according to an embodiment of the present invention;
FIG. 6(a) to FIG. 6(d) are schematic flowcharts of a candidate-item presentation method according to another embodiment of the present invention;
FIG. 7 is a schematic diagram of a candidate-item presentation method according to a specific embodiment of the present invention;
FIG. 8 is a schematic diagram of a candidate-item presentation method according to another specific embodiment of the present invention;
FIG. 9 is a schematic flowchart of a candidate-item presentation method according to still another specific embodiment of the present invention;
FIG. 10 is a schematic diagram of a candidate-item presentation method according to still another specific embodiment of the present invention;
FIG. 11(a) and FIG. 11(b) are schematic diagrams of a candidate-item presentation method according to still another specific embodiment of the present invention;
FIG. 12(a) and FIG. 12(b) are schematic diagrams of a candidate-item presentation method according to still another specific embodiment of the present invention;
FIG. 13(a) to FIG. 13(c) are schematic diagrams of a candidate-item presentation method according to still specific embodiment of the present invention;
FIG. 14(a) to FIG. 14(c) are schematic diagrams of a candidate-item presentation method according to still specific embodiment of the present invention;
FIG. 15 is a schematic diagram of a candidate-item presentation method according to still another specific embodiment of the present invention;
FIG. 16 is a schematic diagram of a candidate-item presentation method according to still another specific embodiment of the present invention;
FIG. 17 is a schematic block diagram of a terminal device according to an embodiment of the present invention;
FIG. 18 is a schematic block diagram of a terminal device according to another embodiment of the present invention; and
FIG. 19 is a schematic block diagram of a terminal device according to still another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention.

In addition, in the embodiments of the present invention, the expressions like "example" and "for example" are used to indicate that an example, an illustration, or a description is described. Any embodiment or design scheme described using "example" or "for example" in the embodiments of the present invention should not be interpreted as being more preferred or more advantageous than another embodiment or design scheme. To be exact, use of the expressions like "example" and "for example" is intended to give a specific presentation of a related concept.

A terminal device in the embodiments of the present invention includes an electronic product that can perform man-machine interaction with a user by using a keyboard, a remote control, a touchpad, and a voice control device. For example, the terminal device may be a computer, a smartphone, a game machine, a wearable device, a portable Android device (Portable Android Device, "PAD" for short), an interactive personality television (Interactive Personality Television, "IPTV" for short), or the like. An operating system that runs on the terminal device may be a Linux-kernel-based operating system such as mobile Android (Android), Ubuntu (Ubuntu) Mobile, or Tizen (Tizen), or may be a desktop operating system such as Windows, Mac OS, or Linux. This is not limited in the present invention.

In the embodiments of the present invention, an application may be referred to as an application program (Application, "APP"). The application may be an application may be an application built in an operating system of the terminal device, or may be a third-party application installed in an operating system of the terminal device. This is not limited in the present invention.

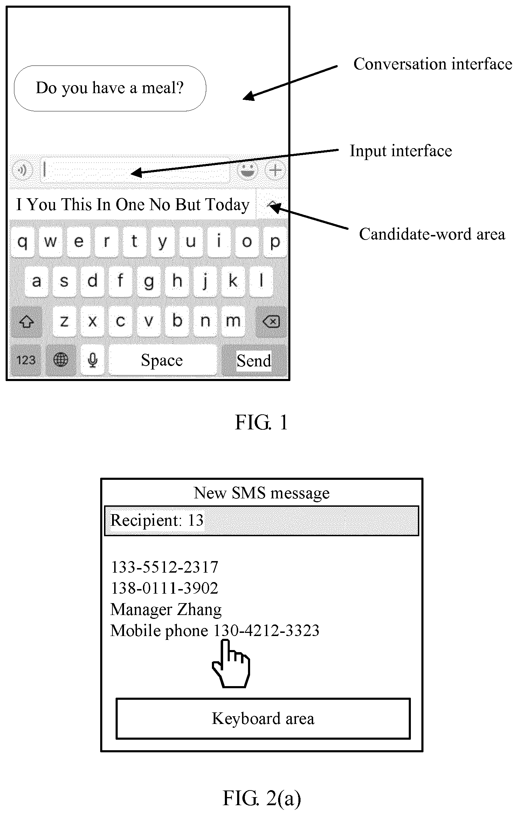

FIG. 1 shows an application scenario according to an embodiment of the present invention. As shown in FIG. 1, after an application (SMS or WeChat) of a terminal device receives a piece of information and when a reply is required, a display interface of an input method provides a candidate-item area for a user after the user triggers the input method, and then the user can directly select a candidate word in the candidate-item area. This reduces manual input actions of the user.

In an existing related technology, before a user starts to input information, default words used relatively frequently are provided for the user in a candidate-word area. For example, as shown in FIG. 1, a mobile phone receives an SMS message, and SMS message content "Do you have a meal?" is displayed on a conversation interface; in this case, after a user triggers an input method, frequently used characters or words such as "I", "You", and "This" appear in the candidate-word area, and regardless of content of the SMS message, candidate words in the candidate-word area remain unchanged. This case cannot be applied to a particular scenario.

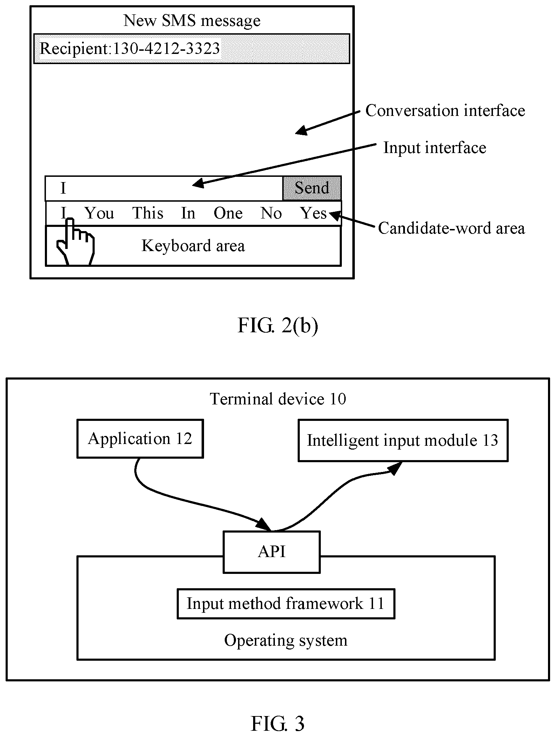

It should be noted that a candidate-item presentation method in this embodiment of the present invention is presenting a candidate item on a candidate-word interface of the input method in FIG. 1, instead of a candidate-item presentation method shown in FIG. 2(a). In FIG. 2(a), if an SMS message needs to be created, after a user enters first several digits of a mobile number, a mobile phone associates possible contacts based on the digits entered by the user, and presents the possible contacts to the user, for selection by the user. For example, after the user enters "13", contacts and phone numbers that are stored in an address book of the mobile phone and that are associated with "13" are presented to the user on a conversation interface, and after the user selects one of the phone numbers, the interface of the mobile phone changes to an interface shown in FIG. 2 (b).

Based on a disadvantage of the prior art, the candidate-item presentation method may be provided. When an input method is triggered, more abundant candidate items that are more applicable to a current input scenario are determined based on related information of an application that is currently in an active process state, and are presented to the user. This improves efficiency of entering information by the user by using the input method.

When determining a candidate item based on the related information of the application that is currently in the active process state, the input method may read data about another application (an application that is not being used currently), and determine the candidate item based on the read data about the another application. Contact reading is used as an example. When an SMS message "What is Xiao Ming's phone number?" is received and the input method is activated, an SMS application is in an active process state, the input method obtains preceding information transferred by the SMS application to a cache area of the input method (for example, the preceding information is "What is Xiao Ming's phone number"), and the input method identifies that an action type corresponding to the preceding information in the SMS application is searching for a contact. In this case, the input method may access a contact database by using a method for externally sharing data by an Android system, for example, a content provider (Content Provider), to read a phone number corresponding to Xiao Ming, as a candidate item to be presented to the user. An interface form for implementing access is: content://com.android.contacts/raw_contacts.

Optionally, a method for reading third-party data by the input method includes but is not limited to: accessing a cloud interface by using a Hypertext Transfer Protocol (Hypertext Transfer Protocol, "HTTP" for short) request, accessing a local shared interface by using an Android interface definition language (Android Interface Definition Language, "AIDL" for short), and reading data about third-party software by using a third-party software development kit (Software Development Kit, "SDK" for short) open interface.

FIG. 3 is a schematic block diagram of a terminal device according to an embodiment of the present invention. As shown in FIG. 3, an operating system of the terminal device 10 includes an input method framework (Input Method Framework, "IMF" for short) 11, an application 12, and an intelligent input module 13. There are different input method frameworks for different operating systems. The input method framework mentioned in this embodiment of the present invention is the same as that in the prior art, and details are not described herein. For the intelligent input module 13, a form includes but is not limited to input performed by using a soft keyboard, and an input mode includes but is not limited to Pinyin input, stroke input, handwriting input, and voice input.

As shown in FIG. 3, an application programming interface (Application Program Interface, "API" for short) 14 is newly added to the IMF 11 of the operating system. The API 14 transfers information. An application installed in the operating system transfers preceding information in the application 12 to the intelligent input module 13 by using the API 14, then the IMF 11 of the operating system activates the intelligent input module 13, and the intelligent input module 13 obtains the preceding information in the application, and presents a candidate item to the user after performing a series of processing operations on the preceding information.

For example, the API 14 may be described as: Public Void SendMessagelnfo (Bundle extras). Bundle extras represents preceding information in an application, and the preceding information exists in a form of a key-value (Key-Value) pair. For different types of applications, preceding information may differ, and quantities of key-value pairs may differ. Using an example in which an application is "WeChat", Bundle extras may be expressed as:

```
            {
               appName: "weChat",
               FriendName: "Xiao Ming",
               Message: ["Are you free tomorrow?",
               "Yes, what's up?",
               "How about going to watch a movie together?",
               "OK. What are the latest movies?"]
               }
```

For example, the preceding information in the application may be a candidate word that is determined by the application and that needs to be provided for the user. In this example, a field "isCandidate" of a Boolean type may be added to "Bundle extras", and when the field "isCandidate" is "true (True)", it indicates that the preceding information transferred by the application to the intelligent input module 13 is the candidate word that needs to be provided for the user finally. Using an example in which an application is an "Amazone APP", when a user taps a category search box in the Amazone APP, the Amazone APP may transfer recommended commodities in the category-based search box to the intelligent input module 13 as candidate words. For example, Bundle extras may be expressed as:

```
            { appName: "Amazone",
           isCandidates: True,
           Candidates: ["Huawei mate 8, "iphone 6s, "Huawei P9"]
           }
```

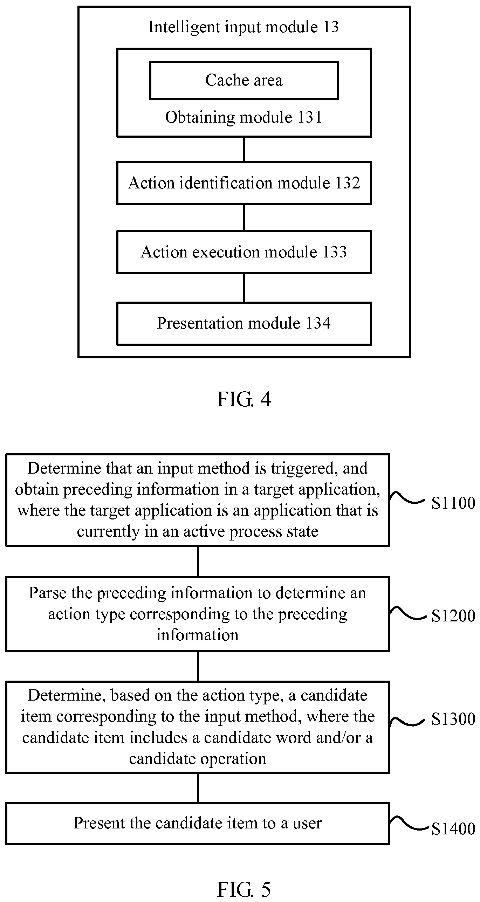

For example, as shown in FIG. 4, the intelligent input module 13 in FIG. 3 includes an obtaining module 131, an action identification module 132, an action execution module 133, and a presentation module 134. The obtaining module 131 has a cache area configured to cache the preceding information transferred by the application to the intelligent input module 13.

The following describes in detail, with reference to the structure of the terminal device shown in FIG. 3 and FIG. 4, a candidate-item presentation method according to the embodiments of the present invention. FIG. 5 is a schematic flowchart of a candidate-item presentation method according to an embodiment of the present invention. As shown in FIG. 5, the method 1000 includes the following steps.

S1100. Determine that an input method is triggered, and obtain preceding information in a target application, where the target application is an application that is currently in an active process state.

Specifically, the current target application is in the active process state, a user triggers system text space to prepare for content input, the operating system of the terminal device invokes the input method framework 11, the target application invokes the API 14 in the operating system to transfer the preceding information in the application to the cache area in the obtaining module 131 of the intelligent input module 13, the input method framework 11 sets the intelligent input module 13 to the active process state, and the obtaining module 131 of the intelligent input module 13 reads the preceding information in the cache.

Optionally, a switch item is added to settings of the input method, to enable or disable a function of "determining a candidate item based on preceding information". When the input method is pulled up, a current status of the switch item is first determined, and if the switch item is in an on state, an operation of identifying an action type continues to be performed, or if the switch item is in an off state, the intelligent input module 13 directly performs returning and no action type and related content are provided.

Optionally, the application that is currently in the active process state may be understood as an application that is currently being used. For example, when a WeChat application receives a message, the WeChat application is an application in an active process state. Alternatively, when a user logs in to an Alipay application for online payment, the user needs to enter a verification code in the Alipay application, a backend of the Alipay application sends an SMS message including a verification code to the user, an SMS application is in an active process state at a time point at which the SMS message including the verification code is received, and then the Alipay application is in the active process state.

S1200. Parse the preceding information to determine an action type corresponding to the preceding information.

Specifically, the action identification module 132 performs matching processing on the preceding information read by the obtaining module 131, to determine the action type corresponding to the preceding information. For example, a regular matching manner, a keyword matching manner, a machine learning algorithm, or another manner may be used to perform matching processing. In addition, related content of the action type may be further identified. The related content may be information that can be presented to the user as a candidate item and that is obtained by the terminal device after the terminal device executes an action related to the action type. Alternatively, the related content may be information required when the terminal device executes an action corresponding to the action type. Table 1 shows a possible correspondence between an action type, preceding information in an application, and related content of the action type according to this embodiment of the present invention. It can be understood that the action type provided in Table 1 is merely an example. During specific implementation, more types may be further included.

**Table 1**

| **Action type** | **Preceding information in an application** | **Related content** |
|---|---|---|
| Fill with a verification code | Text content of an SMS message including the verification code | Verification code itself |
| Recommend a search history | Textbox type and unique identity of an application and unique identifier of a textbox | A packet name of an application and the unique identifier of the textbox |
| Query a geographical location | To-be-replied text | Specific geographical location information such as a street and a house number |
| Extract content of a source text | To-be-replied text | Proper noun such as a personal name, a place name, an organization name, a movie name, or a time word that appears in the to-be-replied text |
| Search for an implicit candidate word | Pinyin string entered by a user and to-be-replied text | Correspondence between a pinyin string and a word group into which word sequences that the to-be-replied text is split into are converted |
| Invoke a fast reply template | To-be-replied text and sending-party information and sending-time information that are in a chat application | Frequently used words used for fast reply |
| Query offline application data | To-be-replied text | Packet name or unique identity of an application corresponding to the to-be-replied text |
| Query and collect statics on titles | Unique identity of an application, unique identity of a chat object, title information mentioned in a process of chatting with the chat object | Titles corresponding to the chat object |
| Query cloud service data | To-be-replied text | Related interface of an online-to-offline (Online To Offline, "O2O" for short) service |
| Quickly pull up or operate an application | To-be-replied text | Application and operation that are related to a local machine |
| Fill with preset candidate words | Preset candidate words and Boolean values | Preset candidate words |

S1300. Determine, based on the action type, a candidate item corresponding to the input method, where the candidate item includes a candidate word and/or a candidate operation.

Specifically, after the action identification module 132 identifies the action type corresponding to the preceding information, the action execution module 133 executes different actions to determine a candidate item.

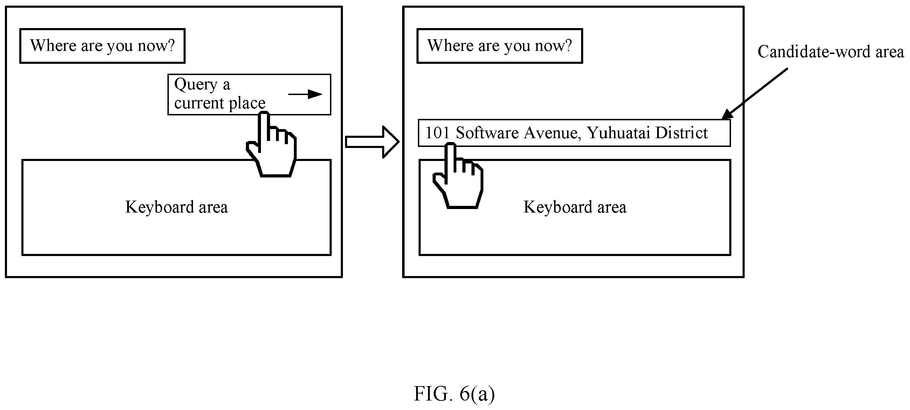

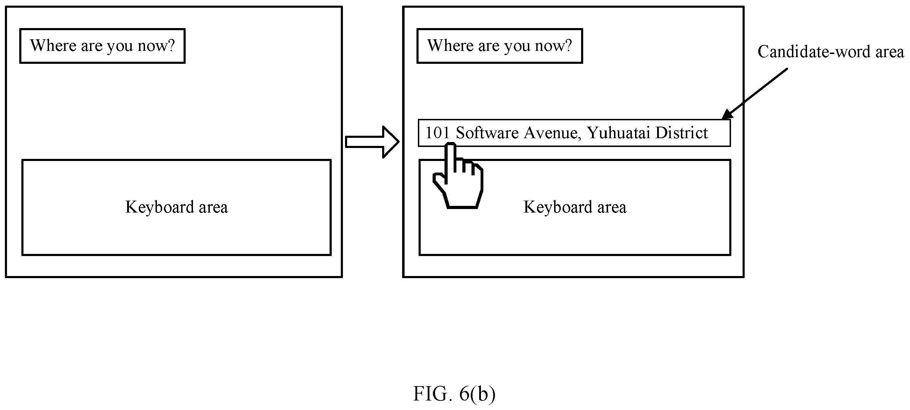

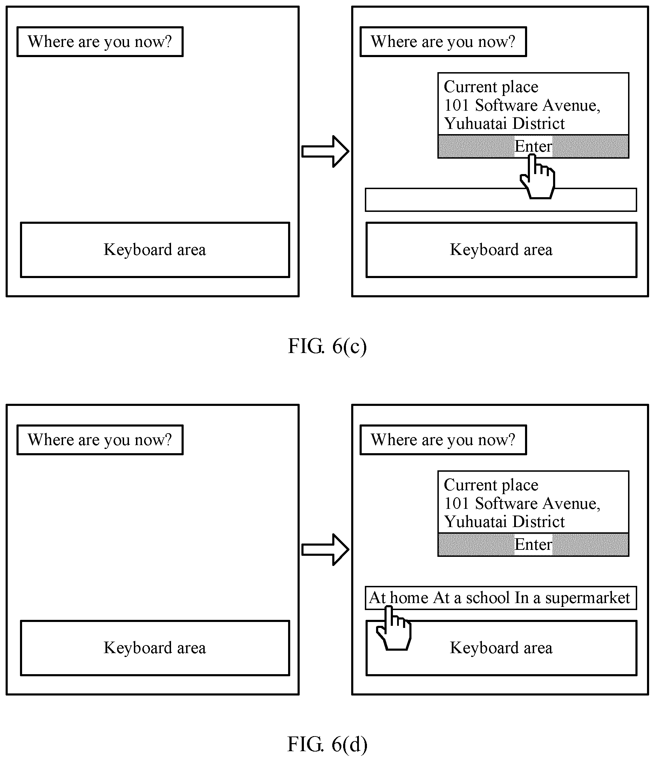

For example, the action identification module 133 may execute an action in a manual trigger mode and an automatic trigger mode, for example, when the action type is "Fill with a verification code" listed in Table 1, the action identification module 133 uses an automatic trigger mode to directly determine the verification code as the candidate item to be transferred to the presentation module 134. When the action type is "Query a geographical location" listed in Table 1, the action identification module 132 may use a manual trigger mode, and the action execution module 133 may pop up a prompt box on a display screen of the terminal device. For example, as shown in FIG. 6(a), content in the prompt box is "Query a current place", a user is required to determine whether to execute a place query action, and when the user taps or slides the prompt box, it is considered that the user triggers the action "Query a current place". In this case, the action execution module 133 queries the current place. Alternatively, as shown in FIG. 6(b) and FIG. 6(c), the action execution module 133 may use an automatic trigger mode to directly query the current place without confirmation by the user, and presents a query result to the user as a candidate item. Alternatively, as shown in FIG. 6(d), the action execution module 133 presents a query result to the user as a candidate item, and the action execution module 133 may further present a frequently used reply word to the user as a candidate item. For example, a frequently used reply statement may be "At home", "At a school", "In a supermarket", or the like.

S1400. Present the candidate item to a user.

The presentation module 134 presents a candidate result to the user. A presentation area corresponding to the presentation module 134 may include a candidate-word area corresponding to the input method and an expanded candidate-word list area, or other areas on the display screen of the terminal device, for example, presentation areas shown in FIG. 6(a) to FIG. 6(d).

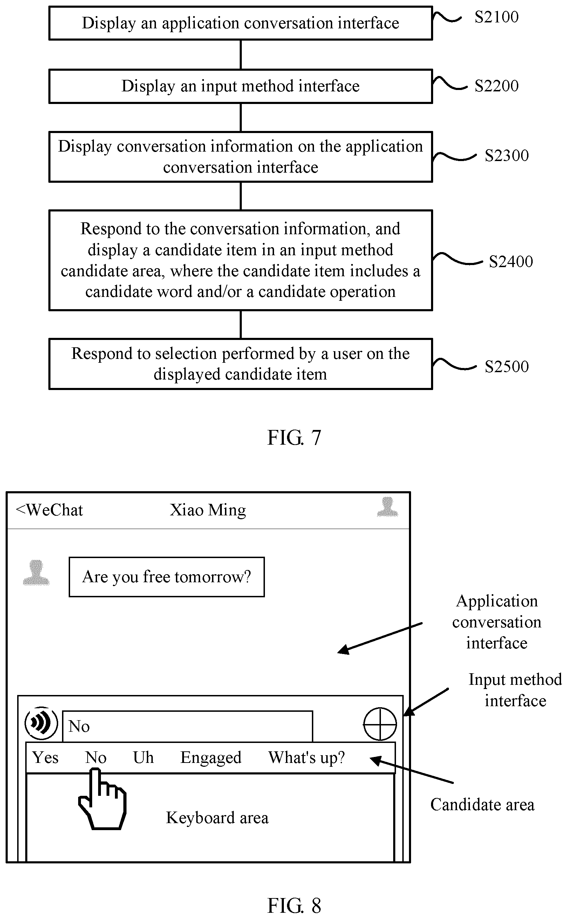

FIG. 7 is a schematic flowchart of a candidate-item presentation method according to another embodiment of the present invention. As shown in FIG. 7, the method 2000 includes the following steps.

S2100. Display an application conversation interface.

S2200. Display an input method interface.

S2300. Display conversation information on the application conversation interface.

Using a WeChat application as an example, FIG. 8 shows the application conversation interface and the input method interface. When the WeChat application receives conversation information sent by "Xiao Ming", the received conversation information is displayed on the application conversation interface, for example, "Are you free tomorrow?" shown in FIG. 8.

It can be understood that more pieces of conversation information may be displayed on the application conversation interface. A specific quantity of pieces of conversation information may be set depending on an actual case, and is not limited in the present invention.

S2400. Respond to the conversation information, and display a candidate item in an input method candidate area, where the candidate item includes a candidate word and/or a candidate operation.

Specifically, for a method for responding to the conversation information by the terminal device, refer to S1200 and S1300 in the method 1000. Details are not described herein again.

S2500. Respond to selection performed by a user on the displayed candidate item.

As shown in FIG. 8, after the user selects one candidate item from displayed candidate items, the candidate item selected by the user is displayed in an input area of an input method.

It should be noted that when the method 2000 is applied to a scenario of entering a verification code, the application conversation interface may not be displayed. For example, when the user makes online payment by using an Alipay application, a backend of the Alipay application sends an SMS message including a verification code to the user; at this time, an interface of the Alipay application can be always displayed without displaying a conversation interface of an SMS application, the input method directly obtains, from preceding information in the SMS application, the verification code as a candidate item, and the verification code is displayed in the input method candidate area.

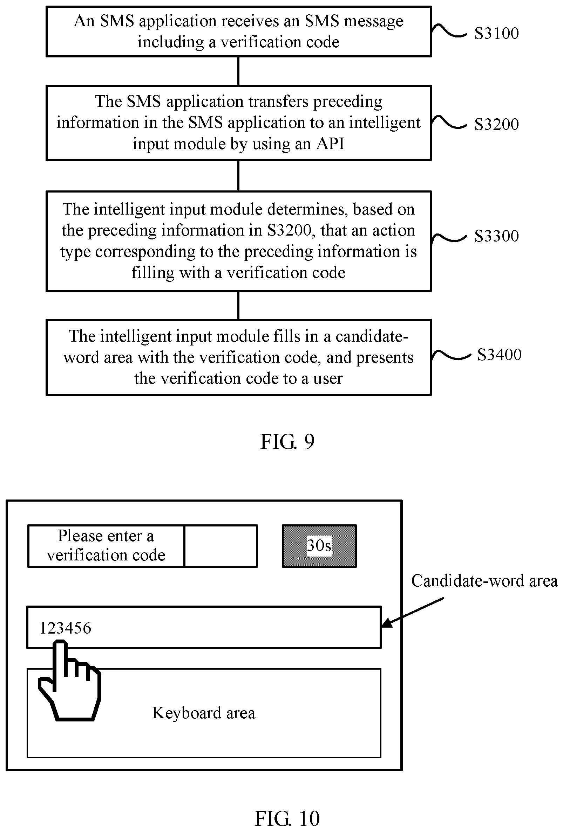

The following describes, with reference to a specific example, a candidate-item presentation method according to an embodiment of the present invention. FIG. 9 shows a candidate-item presentation method in a scenario of filling with a verification code. As shown in FIG. 9, the method 3000 includes the following steps.

S3100. An SMS application receives an SMS message including a verification code.

For example, text content of the SMS message is: Verification code: 123456. Please keep it properly. A sender is 10088.

S3200. The SMS application transfers preceding information in the SMS application to an intelligent input module by using an API.

Specifically, in terms of specific content and an expression manner, the preceding information in the SMS application is: {application type: "SMS application", sender "10088", text content "Verification code: 123456. Please keep it properly"}.

S3300. The intelligent input module determines, based on the preceding information in S3200, that an action type corresponding to the preceding information is filling with a verification code.

Specifically, an action identification module 132 of the intelligent input module parses the preceding information to obtain a regular expression: verification code + punctuation + digit + punctuation; and it can be determined, based on a preset correspondence between a regular expression and an action type, that an action type corresponding to the obtained regular expression is filling with the verification code. Table 2 shows a correspondence between a possible regular expression and an action type according to this embodiment of the present invention. An action type corresponding to the preceding information can be determined based on the correspondence between a regular expression and an action type listed in Table 2. For example, when preceding information is "Do you want to drink milk or coffee?", the action identification module 132 parses the preceding information to obtain a regular expression: verb (drink) + noun (milk) + noun (coffee) + question mark (?); and it can be determined, based on the correspondence between a regular expression and an action type, that an action type corresponding to the preceding information is "extracting content of a source text".

Alternatively, when identifying that the preceding information includes a keyword "verification code"; the action identification module 132 determines, based on a preset correspondence between a keyword and an action type, that an action type corresponding to the preceding information is filling with a verification code. Table 3 shows a possible correspondence between a keyword and an action type according to this embodiment of the present invention.

**Table 2**

| **Regular expression** | **Action type** |
|---|---|
| Verification code + punctuation + digit + punctuation | Fill with a verification code |
| Pronoun + time word + where + question mark | Query a geographical location |
| Verb + noun + noun + question mark | Extract content of a source text |
| Place name + place name + how to go + question mark | Query cloud service data |

**Table 3**

| **Keyword** | **Action type** |
|---|---|
| Verification code and digit | Fill with a verification code |
| When | Invoke a fast reply template |
| Phone number | Query offline application data |
| Application packet name and textbox ID | Recommend a search history |

S3400. The intelligent input module fills in a candidate-word area with the verification code, and presents the verification code to a user.

The action identification module 132 identifies that the verification code in the preceding information is 123456, the action execution module 133 determines the verification code as a candidate item and presents the candidate item to the user, and the user can enter the verification code by directly tapping the verification code in the candidate-word area, as specifically shown in FIG. 10.

Optionally, in S3200, in terms of specific content and an expression manner, the preceding information transferred by the SMS application to the intelligent input module 13 is: {Boolean value: True, Candidate word: 123456}. In S3300, the intelligent input module can determine, based on the Boolean value "True", that an action type corresponding to the preceding information is "Fill with a preset candidate word". In S3400, the intelligent input module 13 fills in the candidate-word area with the candidate word in the preceding information, and presents the candidate word to the user.

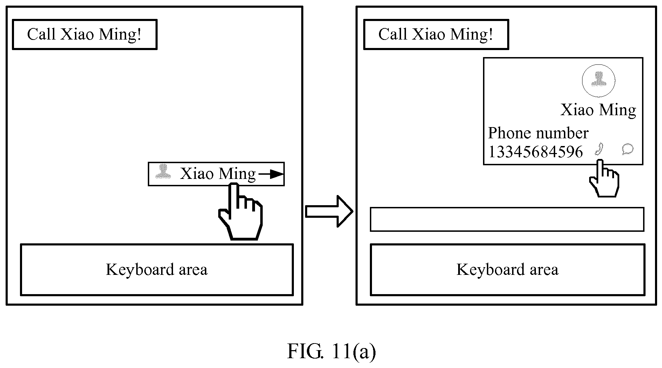

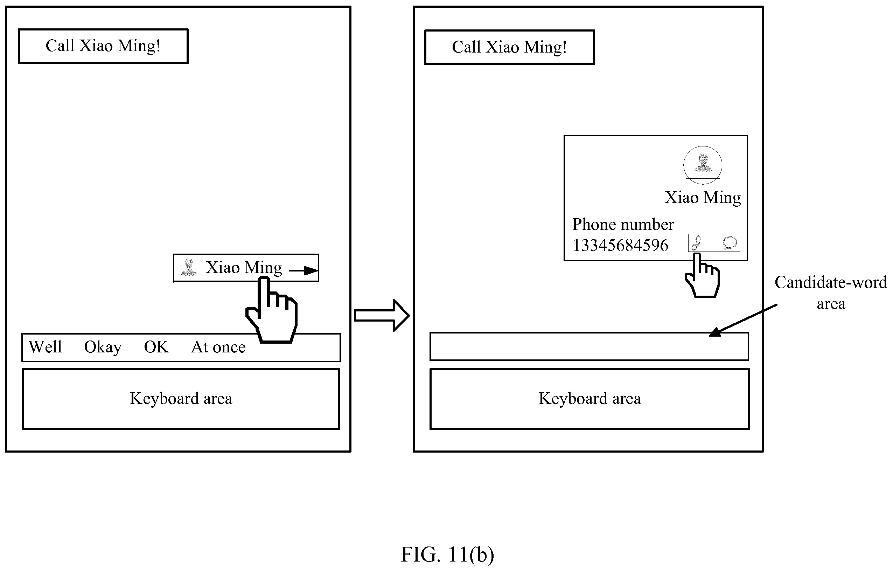

In another embodiment of the present invention, the preceding information transferred by the application to the intelligent input module 13 is a to-be-replied text. For example, content of the to-be-replied text is "Call Xiao Ming". The action identification module 132 analyzes the preceding information to determine that an action type corresponding to the preceding information is "Quickly pull up or operate an application", and an action related to the action type is "Display a shortcut entry for making a call". As shown in FIG. 11(a), the action execution module 133 presents, to the user, the shortcut entry for making a call that serves as a candidate item. In addition, for example, as shown in FIG. 11(b), the action execution module 133 not only can present, to the user, the shortcut entry for making a call that serves as the candidate item, but also can present, to the user in the candidate-word area, frequently used replies as candidate items.

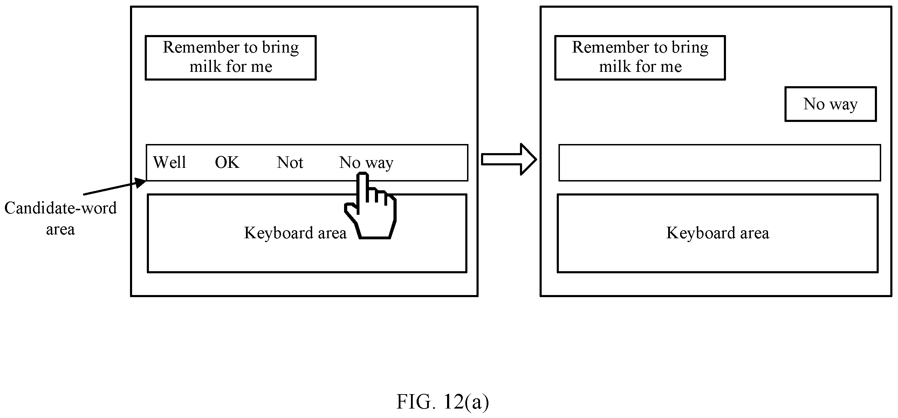

In another embodiment of the present invention, the preceding information transferred by the application to the intelligent input module 13 includes an application identifier and a to-be-replied text. For example, the preceding information is {Packet name of an application: com. Huawei. chat, Text content: Remember to bring milk for me}. The action identification module 132 parses the preceding information to determine that an action type corresponding to the preceding information is "Invoke a fast reply template", and the action execution module 133 queries whether there are frequently used replies, and if there are frequently used replies, presents, to the user, a preset quantity of frequently used replies whose frequency ranks ahead and that serve as candidate items. For example, as shown in FIG. 12(a), a preset quantity may be 4, and four words whose frequency ranks ahead in the frequently used replies are: "Okay", "OK", "Not", and "No way". When a reply entered by the user is a word in the frequently used replies, for example, "No way", frequency of the word increases by 1; or when a reply entered by the user is not a word in the frequently used replies, for example, the reply entered by the user is "No", the reply entered by the user is added to the frequently used replies, and frequency of the reply entered by the user is set to 1.

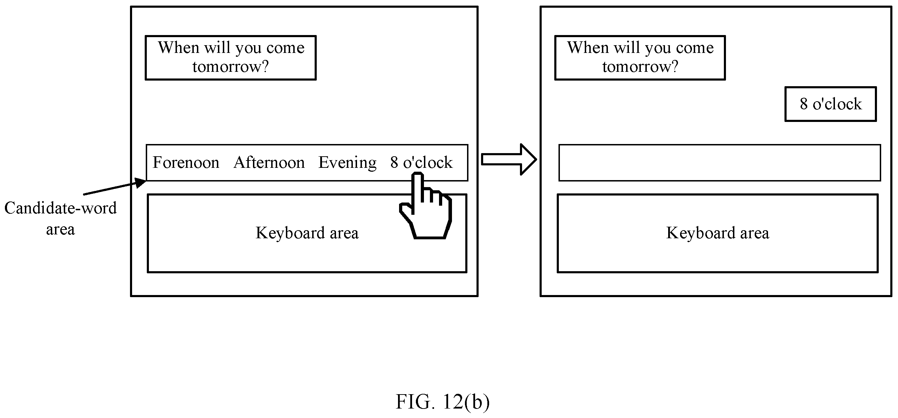

In addition, different frequently used replies correspond to content of different to-be-replied texts. For example, as shown in FIG. 12(b), content of a to-be-replied text is "When will you come tomorrow?". Although a corresponding action type is "Invoke a fast reply template", candidate items obtained by the action execution module 133 through query are different. In this example, the candidate items may be, for example, "Forenoon", "Afternoon", "Evening", or "8 o'clock"; therefore, text content may be classified, different types may correspond to different frequently used reply-word libraries, a correspondence between a text content type and a frequently used reply-word library is established, and the action execution module 133 may determine, based on the correspondence, a frequently used reply-word library to be queried.

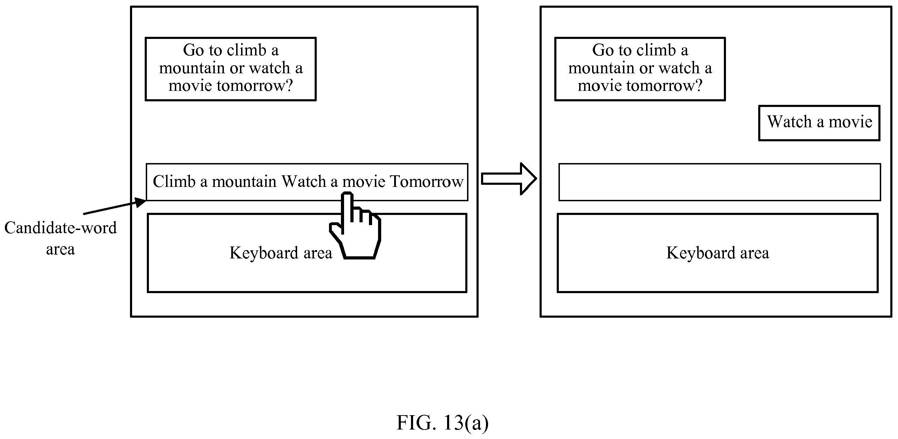

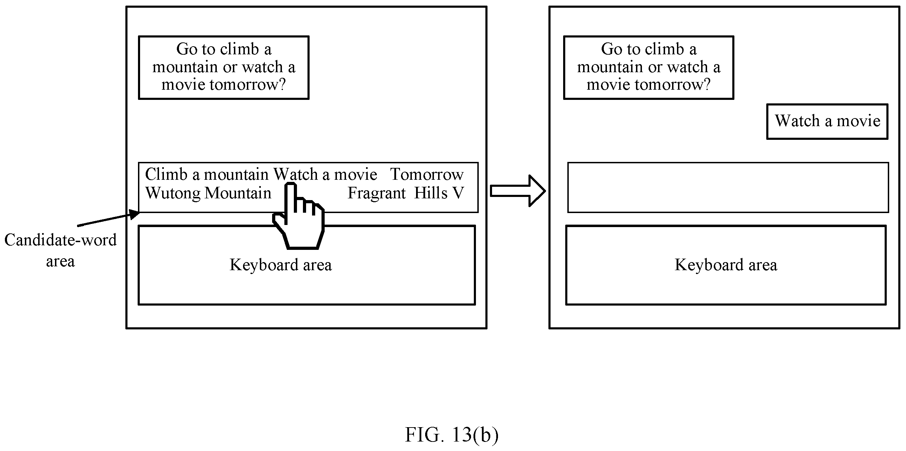

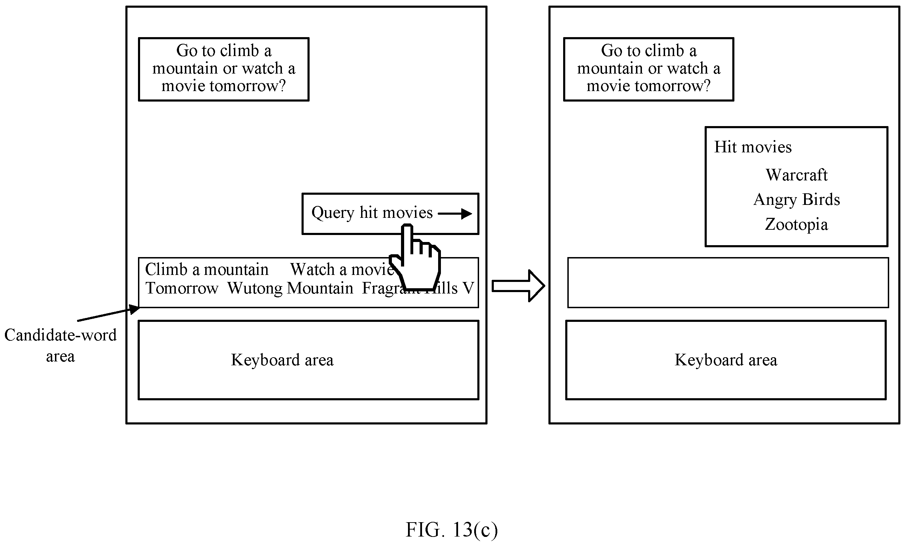

In another embodiment of the present invention, the preceding information transferred by the application to the intelligent input module 13 is a to-be-replied text. The action identification module 132 parses the preceding information to determine that an action type corresponding to the preceding information is "Extract content of a source text", and the action execution module 133 extracts a keyword from the to-be-replied text, and presents the keyword to the user as a candidate item. A keyword extraction rule may be stipulated in advance. For example, a proper noun such as a digit, a personal name, a place name, an organization name, a movie name, or a time word may be extracted as a keyword, and a priority of the extracted keyword as a candidate item may be preset. For example, priorities may be set in sequence in descending order: the digit, the place name, the personal name, the organization name, the movie name, and the time word. For example, content of the to-be-replied text is "Please reply with 1 for renewal, and reply with 2 for unsubscription"; the action execution module 133 extracts "1" and "2" and presents "1" and "2" to the user as candidate words. For example, content of the to-be-replied text is: "Go to climb a mountain or watch a movie tomorrow". As shown in FIG. 13(a), the action execution module 133 extracts "climb a mountain", "watch a movie", and "tomorrow", and presents "climb a mountain", "watch a movie", and "tomorrow" to the user as candidate items. Further, as shown in FIG. 13(b), a mountain name or a movie name may be presented to the user as a candidate item. "V" in FIG. 13(b) represents an expansion button in a candidate-word area. Still further, as shown in FIG. 13(c), the action execution module 133 may further present a prompt box "Query for a hit movie" to the user, so that the user triggers the prompt box and queries a hit movie; and present a query result to the user, so that the user can complete input through "copy" and "paste".

In another embodiment of the present invention, a candidate item may be presented to the user through cloud data query. A specific procedure is:
(1) A chat application receives an SMS message: "How to go to A from B?"
   The chat application may include an SMS application built in an operating system of the terminal device and a third-party communication application installed in the operating system of the terminal device. The third-party communication application may be, for example, WeChat, QQ, or Momo.
(2) The chat application transfers text content of the SMS message to the intelligent input module 13.
   A cache area of the intelligent input module 13 caches the received text content of the SMS message, and then an obtaining module 131 obtains the text content of the SMS message from the cache area.
(3) The action identification module 132 parses the text content of the SMS message to determine that an action type corresponding to the text content of the SMS message is "Query cloud service data", and a specific action that needs to be executed is querying a route.
(4) The action execution module 133 determines a candidate item based on the action type determined by the action identification module 132, and presents the candidate item to the user by using a presentation module 134.

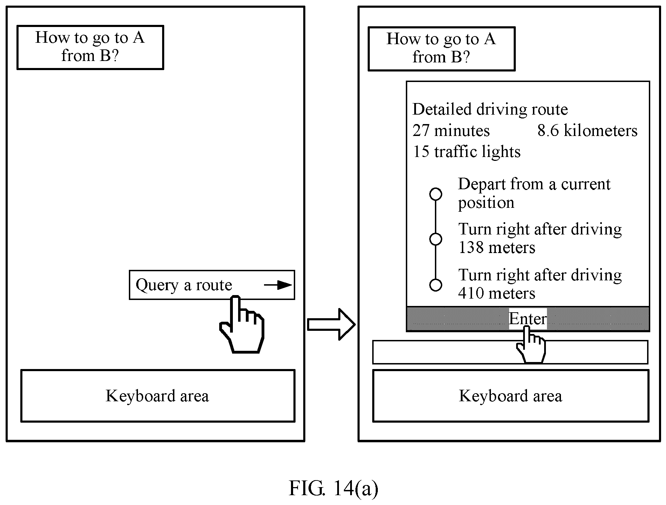

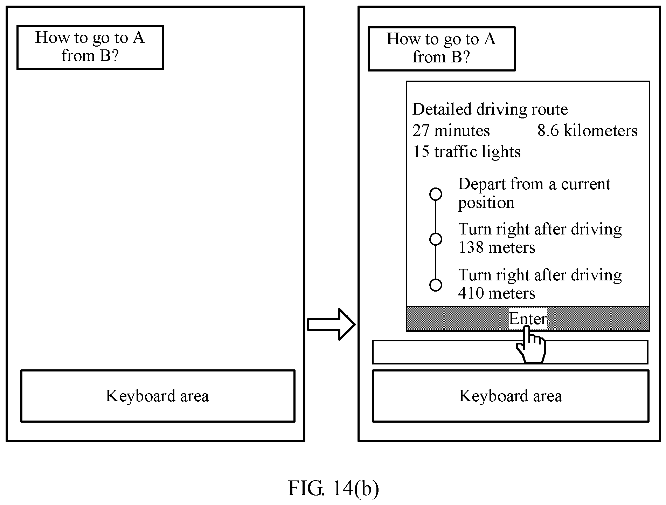

As shown in FIG. 14(a), when determining the candidate item, the action execution module 132 can provide a prompt box for the user, so that the user determines whether to execute an action of querying a route; and when it is determined that the user triggers the action of querying a route, execute the action of querying a route, and present a query result to the user. Alternatively, as shown in FIG. 14(b), the action execution module 132 directly executes the action of querying a route, and presents a query result to the user.

Specifically, when the action execution module 132 needs to query a route, there are two manners for obtaining a route result. One manner is to obtain data by invoking an SDK interface provided by a map APP. The other manner is to access data by using a cloud interface provided by a map provider. A data form includes but is not limited to an HTML5 page.

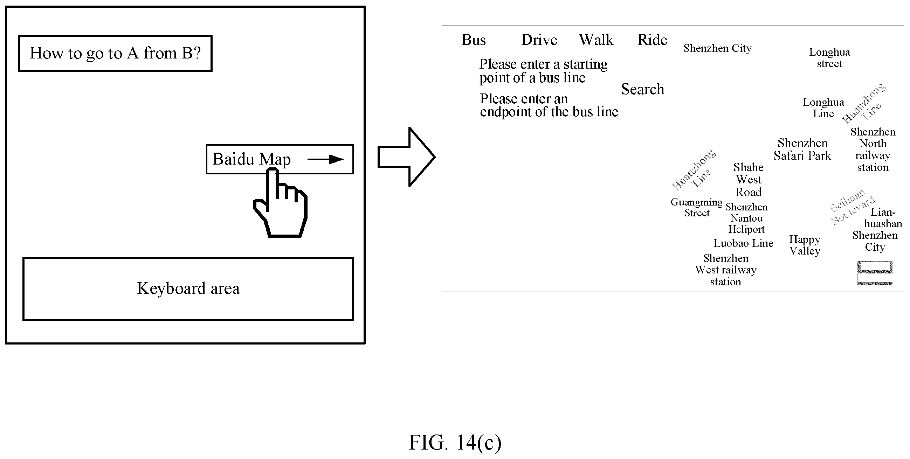

Optionally, when the action identification module 132 determines that an action that needs to be executed is querying a route, the action execution module 133 determines a shortcut entry of a related application as a candidate item and presents the candidate item to the user, instead of executing the action of querying a route. As shown in FIG. 14(c), a shortcut entry of a "Baidu Map" application is presented to the user, and the user can start the Baidu Map by using the shortcut entry, to manually query a route.

It can be understood that for different to-be-replied texts, actions corresponding to action types determined by the action identification module 132 are different. Therefore, actions that need to be executed by the action execution module 133 are also different. For example, the actions that need to be executed by the action execution module 133 may be querying weather, a hit movie, a hit television series, a competition, a flight, encyclopedia, a discount order, a travel route, a nearby merchant, or the like.

In addition, the candidate item may be presented to the user by querying not only cloud data but also offline data. For example, an SMS application receives an SMS message, and text content of the SMS message is "What's Xiao Ming's phone number?". The action identification module 132 identifies that a corresponding action type is "Query offline application data", where a specific action is "Query an address book for Xiao Ming's phone number"; and the action execution module 133 obtains Xiao Ming's phone number by querying the address book, and presents Xiao Ming's phone number to the user as a candidate item. Alternatively, text content of an SMS message is "Are you free tomorrow?". In this case, the action identification module 132 identifies that a corresponding action type is "Query offline application data", where a specific action is "Query data in a calendar or a to-do list application"; and the action execution module 133 determines a candidate item by querying data in a calendar or a to-do list application. For example, when the data in the to-do list application does not include a to-do list corresponding to "tomorrow" or "a date corresponding to tomorrow", candidate items presented to the user are candidate words such as "Yes", "I am free", and "Yes. What's up?"; or when the data in the to-do list application includes a to-do list corresponding to "tomorrow" or "a date corresponding to tomorrow", candidate items presented to the user are candidate words such as "No", "I am engaged for tomorrow", or a specific to-do list is presented to the user.

In another embodiment of the present invention, the preceding information transferred by the application to the intelligent input module 13 is a textbox type of the application, a unique identity of the application, and a unique identifier of a textbox. For example, the preceding information is: {Textbox type: Search box, Application identifier: com. huawei. app, Textbox identifier: 1111}. The action identification module 132 parses the preceding information to determine that an action type corresponding to the preceding information is "Recommend a search history". The action execution module 133 queries whether a historical search record corresponding to "com. huawei. app" and "1111" exists in a local database; and if there is the historical search record, ranks search keywords in the historical search record according to search frequency, presents the search keywords to the user according to a ranking result, and after the user selects, from candidate words, a keyword to be entered, increases, by 1, frequency of the keyword selected by the user; or if there is no historical search record, waits for the user to enter a keyword, stores, into the local database, the keyword entered by the user, and sets frequency of the keyword entered by the user to 1.

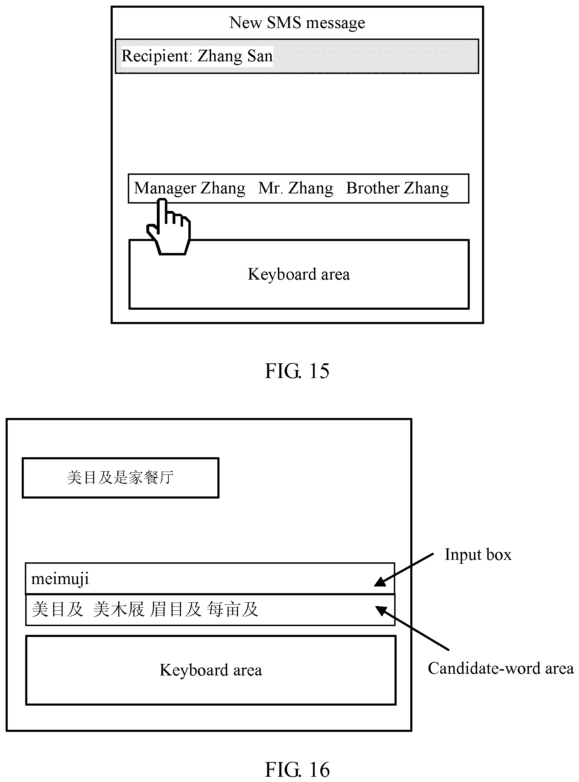

In another embodiment of the present invention, the preceding information transferred by the application to the intelligent input module 13 includes a unique identity of the application, a unique identity of a chat object, and title information mentioned in a process of chatting with the chat object. For example, the preceding information is {Packet name of an application: "com. huawei. chat", Chat object: "Zhang San", Information sent to the chat object: "Manager Zhang, have a meeting at three o'clock in the afternoon"}. The action identification module 132 parses the preceding information to determine that an action type corresponding to the preceding information is "Query statistics on addressing words". The action execution module 133 queries whether there is an addressing word corresponding to "Zhang San"; if there is the addressing word, increases, by 1, frequency of the addressing word corresponding to "Zhang San"; or if there is no addressing word, stores an addressing word "Manager Zhang" corresponding to "Zhang San" in the preceding information, and sets frequency of "Manager Zhang" to 1; in this case, when it is determined next time that an action type corresponding to the preceding information is "Query statistics on addressing words", a packet name of the application is "com. huawei. chat", and a chat object is "Zhang San", an addressing word corresponding to "Zhang San" is presented to the user as a candidate item. For example, as shown in FIG. 15, an SMS application is used to send an SMS message to "Zhang San", and if the terminal device has locally stored addressing words corresponding to the "SMS application" and "Zhang San", the terminal device directly presents the stored addressing words to the user according to use frequency.

In all of the foregoing embodiments, when the user manually enters some pinyin strings, the preceding information transferred by the application to the intelligent input module 13 is the pinyin strings that have been entered and a to-be-replied text. The action identification module 132 analyzes the preceding information to determine that an action type corresponding to the preceding information is "Search for an implicit candidate word". The action execution module 133 splits the to-be-replied text into a word sequence, and uses a converted-into correspondence between a pinyin string and a word group as an implicit candidate word. For example, as shown in FIG. 16, the to-be-replied text is " 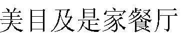 ". The action execution module 133 uses words such as " 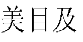 meimuji", " 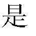 shi", " 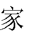 jia", and " 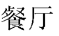 canting" as implicit candidate words. When a user enters "meimuji", " 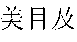 " that appears above is preferentially selected as a candidate word.

It can be understood that a method, in all of the foregoing embodiments, for determining, by the action identification module 132, an action type corresponding to the preceding information in the application is the same as that in the methods 100 and 200. To avoid repetition, details are not described in this embodiment. In addition, in all of the foregoing embodiments in which the candidate word is presented to the user, after determining the candidate word that needs to be presented to the user, the application can transfer the candidate item to the intelligent input module as the preceding information in the application, and the intelligent input module presents the candidate item to the user.

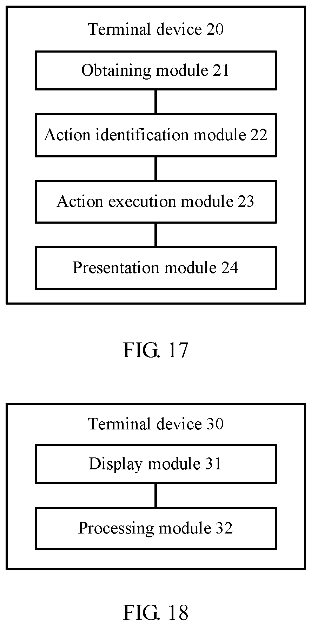

The foregoing has described in detail, with reference to FIG. 2 to FIG. 16, the candidate-item presentation methods according to the embodiments of the present invention. The following describes in detail, with reference to FIG. 17, a terminal device according to an embodiment of the present invention. As shown in FIG. 17, the terminal device 20 includes:
an obtaining module 21, configured to: determine that the input method is triggered, and obtain preceding information in a target application, where the target application is an application that is currently in an active process state;
an action identification module 22, configured to parse the preceding information to determine an action type corresponding to the preceding information;
an action execution module 23, configured to determine, based on the action type, a candidate item corresponding to the input method, where the candidate item includes a candidate word and/or a candidate operation; and
a presentation module 24, configured to present the candidate item to a user.

Therefore, the terminal device in this embodiment of the present invention can present, to the user based on related information of the application that is currently in the active process state, a candidate item displayed during input. In this way, more abundant candidate items that are more applicable to a current input scenario can be determined by making full use of input environment information, and efficiency of entering information by the user by using the input method can be improved.

In this embodiment of the present invention, optionally, in the aspect of parsing the preceding information to determine an action type corresponding to the preceding information, the action identification module 22 is specifically configured to: obtain a keyword in the preceding information; and determine, based on the keyword and a preset correspondence, the action type corresponding to the preceding information, where the correspondence includes a correspondence between the keyword and the action type.

In this embodiment of the present invention, optionally, in the aspect of determining, based on the action type, a candidate item corresponding to the input method, the action execution module 23 is specifically configured to: execute an action corresponding to the action type; and determine information obtained by executing the action as the candidate item corresponding to the input method.

In this embodiment of the present invention, optionally, in the aspect of executing an action corresponding to the action type, the presentation module 24 is specifically configured to present indication information to the user. The indication information is used by the user to choose whether to trigger the action.

The action execution module 23 is specifically configured to execute the action when it is determined that the user triggers the action.

In this embodiment of the present invention, optionally, the preceding information includes a verification code, and the action type is filling with the verification code.

In the aspect of determining, based on the action type, a candidate item corresponding to the input method, the action execution module 24 is specifically configured to determine the verification code as the candidate item corresponding to the input method.

In this embodiment of the present invention, optionally, the preceding information includes a to-be-replied text, and the action type is invoking an application used to respond to the to-be-replied text.

In the aspect of determining, based on the action type, a candidate item corresponding to the input method, the action execution module 23 is specifically configured to determine a shortcut entry of the application used to respond to the to-be-replied text, as the candidate item corresponding to the input method.

In this embodiment of the present invention, optionally, the preceding information includes a to-be-replied text, and the action type is invoking a fast reply template.

In the aspect of determining, based on the action type, a candidate item corresponding to the input method, the action execution module 23 is specifically configured to perform semantic parsing on the to-be-replied text to determine a candidate word library, where the candidate word library includes a frequently used reply word; and determine a preset quantity of words ranking ahead in the candidate word library, as the candidate item corresponding to the input method.

In this embodiment of the present invention, optionally, after the presentation module presents the candidate item to the user, the action execution module 23 is further configured to: determine whether a target word entered by the user is in the candidate word library; and raise a rank of the target word in the candidate word library when it is determined that the target word entered by the user is in the candidate word library; or add the target word to the candidate word library when it is determined that the target word entered by the user is not in the candidate word library.

In this embodiment of the present invention, optionally, the target application is a chat application, the preceding information includes a to-be-replied text, and the action type is extracting content of a source text.

In the aspect of executing an action corresponding to the action type, and determining information obtained by executing the action as the candidate item corresponding to the input method, the action execution module 23 is specifically configured to: extract a keyword in the to-be-replied text; and determine the keyword as the candidate item corresponding to the input method.

In this embodiment of the present invention, optionally, the action type is querying data. In the aspect of executing an action corresponding to the action type, and determining information obtained by executing the action as the candidate item corresponding to the input method, the action execution module 23 is specifically configured to: execute a data query action to obtain data corresponding to the preceding information; and determine the data corresponding to the preceding information as the candidate item corresponding to the input method.

In this embodiment of the present invention, optionally, the preceding information includes identification information of the target application and identification information of a search box in the target application. In the aspect of executing a data query action to obtain data corresponding to the preceding information, the action execution module 23 is specifically configured to: query whether there is a historical search record that is corresponding to the identification information of the target application and the identification information of the search box in the target application; and when it is determined that there is the historical search record, obtain a preset quantity of historical search words ranking ahead in the historical search record.

In this embodiment of the present invention, optionally, the target application is a chat application, and the preceding information includes identification information of the target application and identification information of a chat object.

In the aspect of executing a data query action to obtain data corresponding to the preceding information, the action execution module 23 is specifically configured to: query whether there are addressing terms that are corresponding to the identification information of the target application and the identification information of the chat object; and when it is determined that there are the addressing terms, obtain a preset quantity of addressing terms ranking ahead in the addressing terms.

It should be understood that the terminal device 20 herein is implemented in a form of a function module. The term "module" herein may be an application-specific integrated circuit (Application Specific Integrated Circuit, "ASIC" for short), an electronic circuit, a processor configured to execute one or more software or firmware programs (for example, a shared processor, a dedicated processor, or a group processor) and a memory, or a merged logic circuit and/or another appropriate component supporting the described functions. In an optional example, a person skilled in the art can understand that the terminal device 20 can be configured to perform the procedures and/or steps in the method embodiments. To avoid repetition, details are not described herein again.

The following describes in detail, with reference to FIG. 18, a terminal device according to another embodiment of the present invention. As shown in FIG. 18, the terminal device 30 includes:
a display module 31, configured to display an application conversation interface, where
the display module 31 is further configured to display an input method interface; and
the display module 31 is further configured to display conversation information on the application conversation interface; and
a processing module 32, configured to: respond to the conversation information, and control the display module to display a candidate item in an input method candidate area, where the candidate item includes a candidate word and/or a candidate operation.

The processing module 32 is further configured to respond to selection performed by the user on the displayed candidate item.

Therefore, in response to the conversation information displayed on the application conversation interface, the terminal device in this embodiment of the present invention displays the candidate item in the input method candidate area. In this way, a candidate item that is more applicable to a current input scenario can be determined and presented to the user, and efficiency of entering information by the user by using the input method can be improved.

In this embodiment of the present invention, optionally, in the aspect of responding to the conversation information, and controlling the display module 31 to display a candidate item in an input method candidate area, the processing module 32 is specifically configured to: parse the conversation information to determine an action type corresponding to the conversation information; determine, based on the action type, a candidate item corresponding to the input method; and control the display module 31 to display the candidate item in the input method candidate area.

In this embodiment of the present invention, optionally, in the aspect of parsing the conversation information to determine an action type corresponding to the conversation information, the processing module 32 is specifically configured to: obtain a keyword in the conversation information; and determine, based on the keyword and a preset correspondence, the action type corresponding to the conversation information. The correspondence includes a correspondence between the keyword and the action type.

In this embodiment of the present invention, optionally, in the aspect of determining, based on the action type, a candidate item corresponding to the input method, the processing module 32 is specifically configured to: execute an action corresponding to the action type; and determine information obtained by executing the action as the candidate item corresponding to the input method.

In this embodiment of the present invention, optionally, in the aspect of executing an action corresponding to the action type, the processing module 32 is specifically configured to: control the display screen to display indication information, where the indication information is used by the user to choose whether to trigger the action; and execute the action when it is determined that the user triggers the action.

In this embodiment of the present invention, optionally, the conversation information includes a verification code, and the action type is filling with the verification code. In the aspect of determining, based on the action type, a candidate item corresponding to the input method, the processing module 32 is specifically configured to determine the verification code as the candidate item corresponding to the input method.

In this embodiment of the present invention, optionally, the conversation information includes a to-be-replied text, and the action type is invoking an application used to respond to the to-be-replied text. In the aspect of determining, based on the action type, a candidate item corresponding to the input method, the processing module 32 is specifically configured to determine a shortcut entry of the application used to respond to the to-be-replied text, as the candidate item corresponding to the input method.

In this embodiment of the present invention, optionally, the conversation information includes a to-be-replied text, and the action type is invoking a fast reply template. In the aspect of determining, based on the action type, a candidate item corresponding to the input method, the processing module 32 is specifically configured to: perform semantic parsing on the to-be-replied text to determine a candidate word library, where the candidate word library includes a frequently used reply word; and determine a preset quantity of words ranking ahead in the candidate word library, as the candidate item corresponding to the input method.

In this embodiment of the present invention, optionally, after the responding to selection performed by the user on the candidate item, the processing module is further configured to: determine whether a target word entered by the user is in the candidate word library; and raise a rank of the target word in the candidate word library when it is determined that the target word entered by the user is in the candidate word library; or add the target word to the candidate word library when it is determined that the target word entered by the user is not in the candidate word library.

In this embodiment of the present invention, optionally, the target application is a chat application, the conversation information includes a to-be-replied text, and the action type is extracting content of a source text. In the aspect of executing an action corresponding to the action type, and determining information obtained by executing the action as the candidate item corresponding to the input method, the processing module 32 is specifically configured to: extract a keyword in the to-be-replied text; and determine the keyword as the candidate item corresponding to the input method.

In this embodiment of the present invention, optionally, the action type is querying data. In the aspect of executing an action corresponding to the action type, and determining information obtained by executing the action as the candidate item corresponding to the input method, the processing module 32 is specifically configured to: execute a data query action to obtain data corresponding to the conversation information; and determine the data corresponding to the conversation information as the candidate item corresponding to the input method.

In this embodiment of the present invention, optionally, the conversation information includes identification information of the target application and identification information of a search box in the target application. In the aspect of executing a data query action to obtain data corresponding to the conversation information, the processing module 32 is specifically configured to: query whether there is a historical search record that is corresponding to the identification information of the target application and the identification information of the search box in the target application; and when it is determined that there is the historical search record, obtain a preset quantity of historical search words ranking ahead in the historical search record.

In this embodiment of the present invention, optionally, the target application is a chat application, and the conversation information includes identification information of the target application and identification information of a chat object. In the aspect of executing a data query action to obtain data corresponding to the conversation information, the processing module 32 is specifically configured to: query whether there are addressing terms that are corresponding to the identification information of the target application and the identification information of the chat object; and when it is determined that there are the addressing terms, obtain a preset quantity of addressing terms ranking ahead in the addressing terms.

It should be understood that the terminal device 30 herein is implemented in a form of a function module. The term "module" herein may be an application-specific integrated circuit (Application Specific Integrated Circuit, "ASIC" for short), an electronic circuit, a processor configured to execute one or more software or firmware programs (for example, a shared processor, a dedicated processor, or a group processor) and a memory, or a merged logic circuit and/or another appropriate component supporting the described functions. In an optional example, a person skilled in the art can understand that the terminal device 30 can be configured to perform the procedures and/or steps in the method 2000. To avoid repetition, details are not described herein again.

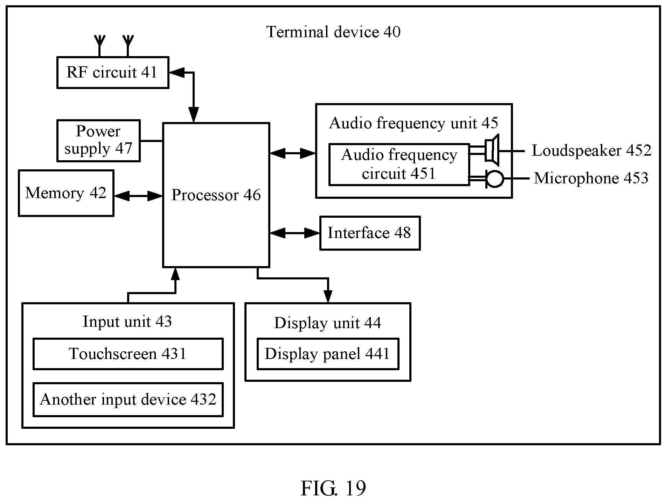

As shown in FIG. 19, an embodiment of the present invention further provides a terminal device 40. As shown in FIG. 19, the terminal device 40 may specifically include components such as a radio frequency (Radio Frequency, "RF" for short) circuit 41, a memory 42, an input unit 43, a display unit 44, an audio frequency circuit 45, a processor 46, a power supply 47, and an interface 48. A person skilled in the art can understand that a structure of the terminal device shown in FIG. 19 constitutes no limitation on the terminal device. The terminal device may specifically include more or fewer components than those shown in FIG. 19, or a combination of some components, or different components distributed in different positions.

The processor 46 is configured to: determine that the input method is triggered, and obtain preceding information in a target application, where the target application is an application that is currently in an active process state; parse the preceding information to determine an action type corresponding to the preceding information; and determine, based on the action type, a candidate item corresponding to the input method, where the candidate item includes a candidate word and/or a candidate operation. The display unit 44 is configured to present the candidate item to a user.

Therefore, the terminal device in this embodiment of the present invention can present, to the user based on related information of the application that is currently in the active process state, a candidate item displayed during input. In this way, more abundant candidate items that are more applicable to a current input scenario can be determined by making full use of input environment information, and efficiency of entering information by the user by using the input method can be improved.

Alternatively, the display unit 44 is configured to display an application conversation interface. The display unit 44 is further configured to display an input method interface. The display unit 44 is further configured to display conversation information on the application conversation interface. The processor 46 is configured to: respond to the conversation information, and display a candidate item in an input method candidate area on the display unit. The candidate item includes a candidate word and/or a candidate operation. The processor 46 is further configured to respond to selection performed by the user on the candidate item.

Therefore, in response to the conversation information displayed on the application conversation interface, the terminal device in this embodiment of the present invention displays the candidate item in the input method candidate area. In this way, a candidate item that is more applicable to a current input scenario can be determined and presented to the user, and efficiency of entering information by the user by using the input method can be improved.

It should be understood that in this embodiment of the present invention, the RF circuit 41 may be configured to: receive and send a signal in a process of receiving and sending information or in a call process; in particular, after receiving a downlink signal, send the downlink signal to the processor 46 for processing, and sends an uplink signal. Generally, the RF circuit includes but is not limited to an antenna, at least one amplifier, a transceiver, a coupler, a low noise amplifier (Low Noise Amplifier, "LNA" for short), a duplexer, and the like. In addition, the RF circuit 41 may communicate with a network and other devices through wireless communication. Any communications standard or protocol may be used during wireless communication, including but not limited to Global System for Mobile Communications (Global System of Mobile communication, "GSM" for short), General Packet Radio Service (General Packet Radio Service, "GPRS" for short), Code Division Multiple Access (Code Division Multiple Access, "CDMA" for short), Wideband Code Division Multiple Access (Wideband Code Division Multiple Access, "WCDMA" for short), Long Term Evolution (Long Term Evolution, "LTE" for short), an e-mail, a short message service (Short Messaging Service, SMS), and the like.

The memory 42 may be configured to store a software program and a module. The processor 46 runs the software program and the module that are stored in the memory 42, to execute various functions and applications of the terminal device and process a signal. The memory 42 may primarily include a program storage area and a data storage area. The program storage area may store an operating system of a smartphone, an application (for example, an application required by an information input function, to be specific, an input method application, an audio play function, or an image play function) required by at least one function, and the like. The data storage area may store data (for example, a word library created in a process in which a user uses an input method, audio data, image data, and a phone book) created depending on usage of the smartphone. In addition, the memory 42 may include a high-speed random access memory, and may further include a non-volatile memory such as at least one disk storage device, a flash memory device, or another volatile solid-state storage device.

The input unit 43 may be configured to: receive input digital or character information, and generate key signal input related to user setting and function control of the terminal device. Specifically, the input unit 43 may include a touchscreen 431 and another input device 432. The touchscreen 431 is also referred to as a touch panel, and can collect a touch operation performed by a user on or near the touchscreen (for example, an operation performed by the user on the touchscreen 431 or near the touchscreen 431 by using any proper object or accessory such as a finger or a stylus), and drive a corresponding connection apparatus according to a preset program. Optionally, the touchscreen 431 may include two components: a touch detection apparatus and a touch controller. The touch detection apparatus detects a touch position of the user, detects a signal brought by a touch operation, and transfers the signal to the touch controller. The touch controller receives touch information from the touch detection apparatus, converts the touch information into contact coordinates, and sends the contact coordinates to the processor 46, and can receive and execute a command sent by the processor 46. In addition, the touchscreen 431 may be implemented by using a plurality of types, such as a resistor type, a capacitor type, an infrared type, and a surface acoustic wave type. The another input device 432 may include but is not limited to one or more of a physical keyboard, a function key (for example, a volume control key or a power on/off key), a trackball, a mouse, a joystick, or the like.

The display unit 44 may be configured to display information entered by the user or information provided for the user, and various menus of the terminal device. The display unit 44 may include a display panel 441. Optionally, the display panel 441 may be configured in a form of a liquid crystal display (Liquid Crystal Display, "LCD" for short), an organic light-emitting diode (Organic Light-Emitting Diode, "OLED" for short), or the like. Further, the touchscreen 431 may cover the display panel 441. After detecting a touch operation on or near the touchscreen 431, the touchscreen 431 transfers information about the touch operation to the processor 46 to determine a touch event type. Subsequently, the processor 46 provides corresponding visual output on the display panel 441 according to the touch event type. Although the touchscreen 431 and the display panel 441 in FIG. 19 are used as two independent components to implement input and output functions of the smartphone, in some embodiments, the touchscreen 431 and the display panel 441 may be integrated to implement the input and output functions of the terminal device.

The audio frequency unit 45 includes an audio frequency circuit 451, a loudspeaker 452, and a microphone 453. The audio frequency unit 45 may provide, for the user, an audio frequency interface between the audio frequency unit 45 and the terminal device. The audio circuit 451 may transmit, to the loudspeaker 452, an electrical signal that is obtained by converting received audio data, and the loudspeaker 452 converts the electrical signal into a sound signal for outputting. In addition, the microphone 453 converts a collected sound signal into an electrical signal, and the audio frequency circuit 451 receives the electrical signal and converts electrical signal into audio data, and then outputs the audio data to the RF circuit 41, so that the audio data is sent to, for example, another terminal device, or the audio data is output to the memory 42 for further processing.

The processor 46 is a control center of the mobile terminal, and is connected to all components of the entire terminal device by using various interfaces and lines. By running or executing the software program and/or module stored in the memory 42 and invoking data stored in the memory 42, the processor 46 executes various functions of the terminal device and processes data, to perform corresponding functions of the terminal device. Optionally, the processor 46 may include one or more processing units. Preferably, an application processor and a modem processor may be integrated in the processor 46. The application processor mainly processes an operating system, a user interface, an application, and the like, and the modem processor mainly processes wireless communication. It can be understood that the modem processor may alternatively be not integrated in the processor 46.

The terminal device further includes the power supply 47 (such as a battery) that supplies power to each component. Preferably, the power supply may be logically connected to the processor 46 by using a power supply management system. In this way, functions such as management of charging, discharging, and power consumption are implemented by using the power supply management system.

The interface 48 may be connected to another device, and transmit data between the terminal device and the another device.

Optionally, the terminal device may further include a Wireless Fidelity (Wireless Fidelity, "Wi-Fi" for short) module, a Bluetooth module, and the like that are not shown in FIG. 19. Details are not described herein in this embodiment of the present invention.

Optionally, in an embodiment, in the aspect of parsing the preceding information to determine an action type corresponding to the preceding information, the processor 46 is specifically configured to: obtain a keyword in the preceding information; and determine, based on the keyword and a preset correspondence, the action type corresponding to the preceding information, where the correspondence includes a correspondence between the keyword and the action type.

Optionally, in an embodiment, in the aspect of determining, based on the action type, a candidate item corresponding to the input method, the processor 46 is specifically configured to: execute an action corresponding to the action type; and determine information obtained by executing the action as the candidate item corresponding to the input method.

Optionally, in an embodiment, in the aspect of executing an action corresponding to the action type, the display unit 44 is specifically configured to present indication information to the user. The indication information is used by the user to choose whether to trigger the action. The processor 46 is specifically configured to execute the action when it is determined that the user triggers the action.

Optionally, in an embodiment, the preceding information includes a verification code, and the action type is filling with the verification code.

In the aspect of determining, based on the action type, a candidate item corresponding to the input method, the processor 46 is specifically configured to determine the verification code as the candidate item corresponding to the input method.

Optionally, in an embodiment, the preceding information includes a to-be-replied text, and the action type is invoking an application used to respond to the to-be-replied text.

In the aspect of determining, based on the action type, a candidate item corresponding to the input method, the processor 46 is specifically configured to determine a shortcut entry of the application used to respond to the to-be-replied text, as the candidate item corresponding to the input method.

Optionally, in an embodiment, the preceding information includes a to-be-replied text, and the action type is invoking a fast reply template.

In the aspect of determining, based on the action type, a candidate item corresponding to the input method, the processor 46 is specifically configured to: perform semantic parsing on the to-be-replied text to determine a candidate word library, where the candidate word library includes a frequently used reply word; and determine a preset quantity of words ranking ahead in the candidate word library, as the candidate item corresponding to the input method.

Optionally, in an embodiment, after the display unit 44 presents the candidate item to the user, the processor 46 is further configured to: determine whether a target word entered by the user is in the candidate word library; and raise a rank of the target word in the candidate word library when it is determined that the target word entered by the user is in the candidate word library; or add the target word to the candidate word library when it is determined that the target word entered by the user is not in the candidate word library.

Optionally, in an embodiment, the target application is a chat application, the preceding information includes a to-be-replied text, and the action type is extracting content of a source text.

In the aspect of executing an action corresponding to the action type, and determining information obtained by executing the action as the candidate item corresponding to the input method, the processor 46 is specifically configured to: extract a keyword in the to-be-replied text; and determine the keyword as the candidate item corresponding to the input method.

Optionally, in an embodiment, the action type is querying data. In the aspect of executing an action corresponding to the action type, and determining information obtained by executing the action as the candidate item corresponding to the input method, the processor 46 is specifically configured to: execute a data query action to obtain data corresponding to the preceding information; and determine the data corresponding to the preceding information as the candidate item corresponding to the input method.

Optionally, in an embodiment, the preceding information includes identification information of the target application and identification information of a search box in the target application.

In the aspect of executing a data query action to obtain data corresponding to the preceding information, the processor 46 is specifically configured to: query whether there is a historical search record that is corresponding to the identification information of the target application and the identification information of the search box in the target application; and when it is determined that there is the historical search record, obtain a preset quantity of historical search words ranking ahead in the historical search record.

Optionally, in an embodiment, the target application is a chat application, and the preceding information includes identification information of the target application and identification information of a chat object. In the aspect of executing a data query action to obtain data corresponding to the preceding information, the processor 46 is specifically configured to: query whether there are addressing terms that are corresponding to the identification information of the target application and the identification information of the chat object; and when it is determined that there are the addressing terms, obtain a preset quantity of addressing terms ranking ahead in the addressing terms.

It should be understood that the terminal device 40 in this embodiment of the present invention may correspond to the terminal device 20 or the terminal device 30 in the embodiments of the present invention, and may correspond to the terminal device in the method embodiment of the present invention. For brevity, details are not described herein again.

It should be understood that "an embodiment" or "an embodiment" mentioned in the whole specification means that particular features, structures, or characteristics related to the embodiment are included in at least one embodiment of the present invention. Therefore, "in an embodiment" or "in an embodiment" appearing throughout the specification does not refer to a same embodiment. In addition, these particular features, structures, or characteristics may be combined in one or more embodiments by using any appropriate manner.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in the embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of the present invention.

Methods or steps described in the embodiments disclosed in this specification may be implemented by hardware, a software program executed by a processor, or a combination thereof. The software program may be put in a random access memory (Random Access Memory, RAM), a memory, a read-only memory (Read-Only Memory, ROM), an electrically programmable read-only memory (Electrically Programmable Read-Only Memory, EPROM), an electrically erasable programmable read-only memory (Electrically Erasable Programmable Read-Only Memory, EEPROM), a register, a hard disk drive, a removable disk, a compact disc read-only memory (Compact Disc Read-Only Memory, CD-ROM), or any other form of storage medium well known in the art.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit.

The present invention is described in detail with reference to the accompanying drawings and in combination with the preferred embodiments, but the present invention is not limited thereto. Various equivalent modifications or replacements can be made to the embodiments of the present invention by a person of ordinary skill in the art without departing from the spirit and essence of the present invention, and the modifications or replacements shall fall within the scope of the present invention.

## Claims

1. A candidate-item presentation method, wherein the method is applied to a scenario in which a user enters information by using an input method, and the method comprises:
determining that the input method is triggered, and obtaining preceding information in a target application, wherein the target application is an application that is currently in an active process state;
parsing the preceding information to determine an action type corresponding to the preceding information;
determining, based on the action type, a candidate item corresponding to the input method, wherein the candidate item comprises a candidate word and/or a candidate operation; and
presenting the candidate item to a user.

2. The method according to claim 1, wherein the parsing the preceding information to determine an action type corresponding to the preceding information comprises:
obtaining a keyword in the preceding information; and
determining, based on the keyword and a preset correspondence, the action type corresponding to the preceding information, wherein the correspondence comprises a correspondence between the keyword and the action type.

3. The method according to claim 1 or 2, wherein the determining, based on the action type, a candidate item corresponding to the input method comprises:
executing an action corresponding to the action type; and
determining information obtained by executing the action as the candidate item corresponding to the input method.

4. The method according to claim 3, wherein the executing an action corresponding to the action type comprises:
presenting indication information to the user, wherein the indication information is used by the user to choose whether to trigger the action; and
executing the action when it is determined that the user triggers the action.

5. The method according to claim 1 or 2, wherein the preceding information comprises a verification code, and the action type is filling with the verification code; and
the determining, based on the action type, a candidate item corresponding to the input method comprises:
determining the verification code as the candidate item corresponding to the input method.

6. The method according to claim 1 or 2, wherein the preceding information comprises a to-be-replied text, and the action type is invoking an application used to respond to the to-be-replied text; and
the determining, based on the action type, a candidate item corresponding to the input method comprises:
determining a shortcut entry of the application used to respond to the to-be-replied text, as the candidate item corresponding to the input method.

7. The method according to claim 1 or 2, wherein the preceding information comprises a to-be-replied text, and the action type is invoking a fast reply template; and
the determining, based on the action type, a candidate item corresponding to the input method comprises:
performing semantic parsing on the to-be-replied text to determine a candidate word library, wherein the candidate word library comprises a frequently used reply word; and
determining a preset quantity of words ranking ahead in the candidate word library, as the candidate item corresponding to the input method.

8. The method according to claim 7, wherein after the presenting the candidate item to a user, the method further comprises:
determining whether a target word entered by the user is in the candidate word library; and
raising a rank of the target word in the candidate word library when it is determined that the target word entered by the user is in the candidate word library; or
adding the target word to the candidate word library when it is determined that the target word entered by the user is not in the candidate word library.

9. The method according to claim 3 or 4, wherein the target application is a chat application, the preceding information comprises a to-be-replied text, and the action type is extracting content of a source text; and
the executing an action corresponding to the action type, and determining information obtained by executing the action as the candidate item corresponding to the input method comprises:
extracting a keyword in the to-be-replied text; and
determining the keyword as the candidate item corresponding to the input method.

10. The method according to claim 3 or 4, wherein the action type is querying data; and the executing an action corresponding to the action type, and determining information obtained by executing the action as the candidate item corresponding to the input method comprises:
executing a data query action to obtain data corresponding to the preceding information; and
determining the data corresponding to the preceding information as the candidate item corresponding to the input method.

11. The method according to claim 10, wherein the preceding information comprises identification information of the target application and identification information of a search box in the target application; and
the executing a data query action to obtain data corresponding to the preceding information comprises:
querying whether there is a historical search record that is corresponding to the identification information of the target application and the identification information of the search box in the target application; and
when it is determined that there is the historical search record, obtaining a preset quantity of historical search words ranking ahead in the historical search record.

12. The method according to claim 10, wherein the target application is a chat application, and the preceding information comprises identification information of the target application and identification information of a chat object; and
the executing a data query action to obtain data corresponding to the preceding information comprises:
querying whether there are addressing terms that are corresponding to the identification information of the target application and the identification information of the chat object; and
when it is determined that there are the addressing terms, obtaining a preset quantity of addressing terms ranking ahead in the addressing terms.

13. A terminal device for candidate-item presentation, wherein the terminal device comprises:
an obtaining module, configured to: determine that the input method is triggered, and obtain preceding information in a target application, wherein the target application is an application that is currently in an active process state;
an action identification module, configured to parse the preceding information to determine an action type corresponding to the preceding information;
an action execution module, configured to determine, based on the action type, a candidate item corresponding to the input method, wherein the candidate item comprises a candidate word and/or a candidate operation; and
a presentation module, configured to provide the candidate item for a user.

14. The terminal device according to claim 13, wherein when parsing the preceding information to determine an action type corresponding to the preceding information, the action identification module is specifically configured to:
obtain a keyword in the preceding information; and
determine, based on the keyword and a preset correspondence, the action type corresponding to the preceding information, wherein the correspondence comprises a correspondence between the keyword and the action type.

15. The terminal device according to claim 13 or 14, wherein in the aspect of determining, based on the action type, a candidate item corresponding to the input method, the action execution module is specifically configured to:
execute an action corresponding to the action type; and
determine information obtained by executing the action as the candidate item corresponding to the input method.

16. The terminal device according to claim 15, wherein in the aspect of executing an action corresponding to the action type, the presentation module is specifically configured to:
present indication information to the user, wherein the indication information is used by the user to choose whether to trigger the action; and
the action execution module is specifically configured to:
execute the action when it is determined that the user triggers the action.

17. The terminal device according to claim 13 or 14, wherein the preceding information comprises a verification code, and the action type is filling with the verification code; and
in the aspect of determining, based on the action type, a candidate item corresponding to the input method, the action execution module is specifically configured to:
determine the verification code as the candidate item corresponding to the input method.

18. The terminal device according to claim 13 or 14, wherein the preceding information comprises a to-be-replied text, and the action type is invoking an application used to respond to the to-be-replied text; and
in the aspect of determining, based on the action type, a candidate item corresponding to the input method, the action execution module is specifically configured to:
determine a shortcut entry of the application used to respond to the to-be-replied text, as the candidate item corresponding to the input method.

19. The terminal device according to claim 13 or 14, wherein the preceding information comprises a to-be-replied text, and the action type is invoking a fast reply template; and
in the aspect of determining, based on the action type, a candidate item corresponding to the input method, the action execution module is specifically configured to:
perform semantic parsing on the to-be-replied text to determine a candidate word library, wherein the candidate word library comprises a frequently used reply word; and
determine a preset quantity of words ranking ahead in the candidate word library, as the candidate item corresponding to the input method.

20. The terminal device according to claim 19, wherein after the presentation module presents the candidate item to the user, the action execution module is further configured to:
determine whether a target word entered by the user is in the candidate word library; and
raise a rank of the target word in the candidate word library when it is determined that the target word entered by the user is in the candidate word library; or
add the target word to the candidate word library when it is determined that the target word entered by the user is not in the candidate word library.

21. The terminal device according to claim 15 or 16, wherein the target application is a chat application, the preceding information comprises a to-be-replied text, and the action type is extracting content of a source text; and
in the aspect of executing an action corresponding to the action type, and determining information obtained by executing the action as the candidate item corresponding to the input method, the action execution module is specifically configured to:
extract a keyword in the to-be-replied text; and
determine the keyword as the candidate item corresponding to the input method.

22. The terminal device according to claim 15 or 16, wherein the action type is querying data; and
in the aspect of executing an action corresponding to the action type, and determining information obtained by executing the action as the candidate item corresponding to the input method, the action execution module is specifically configured to:
execute a data query action to obtain data corresponding to the preceding information; and
determine the data corresponding to the preceding information as the candidate item corresponding to the input method.

23. The terminal device according to claim 22, wherein the preceding information comprises identification information of the target application and identification information of a search box in the target application; and
in the aspect of executing a data query action to obtain data corresponding to the preceding information, the action execution module is specifically configured to:
query whether there is a historical search record that is corresponding to the identification information of the target application and the identification information of the search box in the target application; and
when it is determined that there is the historical search record, obtain a preset quantity of historical search words ranking ahead in the historical search record.

24. The terminal device according to claim 22, wherein the target application is a chat application, and the preceding information comprises identification information of the target application and identification information of a chat object; and
in the aspect of executing a data query action to obtain data corresponding to the preceding information, the action execution module is specifically configured to:
query whether there are addressing terms that are corresponding to the identification information of the target application and the identification information of the chat object; and
when it is determined that there are the addressing terms, obtain a preset quantity of addressing terms ranking ahead in the addressing terms.

25. A terminal device, comprising:
a processor, configured to: determine that the input method is triggered, and obtain preceding information in a target application, wherein the target application is an application that is currently in an active process state, wherein
the processor is further configured to parse the preceding information to determine an action type corresponding to the preceding information; and
the processor is further configured to determine, based on the action type, a candidate item corresponding to the input method, wherein the candidate item comprises a candidate word and/or a candidate operation; and
a display screen, configured to present the candidate item to a user.

26. The terminal device according to claim 25, wherein in the aspect of parsing the preceding information to determine an action type corresponding to the preceding information, the processor is specifically configured to:
obtain a keyword in the preceding information; and
determine, based on the keyword and a preset correspondence, the action type corresponding to the preceding information, wherein the correspondence comprises a correspondence between the keyword and the action type.

27. The terminal device according to claim 25 or 26, wherein in the aspect of determining, based on the action type, a candidate item corresponding to the input method, the processor is specifically configured to:
execute an action corresponding to the action type; and
determine information obtained by executing the action as the candidate item corresponding to the input method.

28. The terminal device according to claim 27, wherein in the aspect of executing an action corresponding to the action type, the processor is specifically configured to:
present indication information to the user, wherein the indication information is used by the user to choose whether to trigger the action; and
execute the action when it is determined that the user triggers the action.

29. The terminal device according to claim 25 or 26, wherein the preceding information comprises a verification code, and the action type is filling with the verification code; and
in the aspect of determining, based on the action type, a candidate item corresponding to the input method, the processor is specifically configured to:
determine the verification code as the candidate item corresponding to the input method.

30. The terminal device according to claim 25 or 26, wherein the preceding information comprises a to-be-replied text, and the action type is invoking an application used to respond to the to-be-replied text; and
in the aspect of determining, based on the action type, a candidate item corresponding to the input method, the processor is specifically configured to:
determine a shortcut entry of the application used to respond to the to-be-replied text, as the candidate item corresponding to the input method.

31. The terminal device according to claim 25 or 26, wherein the preceding information comprises a to-be-replied text, and the action type is invoking a fast reply template; and
in the aspect of determining, based on the action type, a candidate item corresponding to the input method, the processor is specifically configured to:
perform semantic parsing on the to-be-replied text to determine a candidate word library, wherein the candidate word library comprises a frequently used reply word; and
determine a preset quantity of words ranking ahead in the candidate word library, as the candidate item corresponding to the input method.

32. The terminal device according to claim 31, wherein after the display screen presents the candidate item to the user, the processor is further configured to:
determine whether a target word entered by the user is in the candidate word library; and
raise a rank of the target word in the candidate word library when it is determined that the target word entered by the user is in the candidate word library; or
add the target word to the candidate word library when it is determined that the target word entered by the user is not in the candidate word library.

33. The terminal device according to claim 25 or 26, wherein the target application is a chat application, the preceding information comprises a to-be-replied text, and the action type is extracting content of a source text; and
in the aspect of executing an action corresponding to the action type, and determining information obtained by executing the action as the candidate item corresponding to the input method, the processor is specifically configured to:
extract a keyword in the to-be-replied text; and
determine the keyword as the candidate item corresponding to the input method.

34. The terminal device according to claim 25 or 26, wherein the action type is querying data; and
in the aspect of executing an action corresponding to the action type, and determining information obtained by executing the action as the candidate item corresponding to the input method, the processor is specifically configured to:
execute a data query action to obtain data corresponding to the preceding information; and
determine the data corresponding to the preceding information as the candidate item corresponding to the input method.

35. The terminal device according to claim 34, wherein the preceding information comprises identification information of the target application and identification information of a search box in the target application; and
in the aspect of executing a data query action to obtain data corresponding to the preceding information, the processor is specifically configured to:
query whether there is a historical search record that is corresponding to the identification information of the target application and the identification information of the search box in the target application; and
when it is determined that there is the historical search record, obtain a preset quantity of historical search words ranking ahead in the historical search record.

36. The terminal device according to claim 34, wherein the target application is a chat application, and the preceding information comprises identification information of the target application and identification information of a chat object; and
in the aspect of executing a data query action to obtain data corresponding to the preceding information, the processor is specifically configured to:
query whether there are addressing terms that are corresponding to the identification information of the target application and the identification information of the chat object; and
when it is determined that there are the addressing terms, obtain a preset quantity of addressing terms ranking ahead in the addressing terms.

37. A candidate-item presentation method, wherein the method is applied to a scenario in which a user enters information by using an input method, and the method comprises:
displaying an application conversation interface;
displaying an input method interface;
displaying conversation information on the application conversation interface;
responding to the conversation information, and displaying a candidate item in an input method candidate area, wherein the candidate item comprises a candidate word and/or a candidate operation; and
responding to selection performed by the user on the candidate item.

38. The method according to claim 37, wherein the responding to the conversation information, and displaying a candidate item in an input method candidate area comprises:
parsing the conversation information to determine an action type corresponding to the conversation information;
determining, based on the action type, a candidate item corresponding to the input method; and
displaying the candidate item in the input method candidate area.

39. The method according to claim 38, wherein the parsing the conversation information to determine an action type corresponding to the conversation information comprises:
obtaining a keyword in the conversation information; and
determining, based on the keyword and a preset correspondence, the action type corresponding to the conversation information, wherein the correspondence comprises a correspondence between the keyword and the action type.

40. The method according to claim 38 or 39, wherein the determining, based on the action type, a candidate item corresponding to the input method comprises:
executing an action corresponding to the action type; and
determining information obtained by executing the action as the candidate item corresponding to the input method.

41. The method according to claim 40, wherein the executing an action corresponding to the action type comprises:
displaying indication information, wherein the indication information is used by the user to choose whether to trigger the action; and
executing the action when it is determined that the user triggers the action.

42. The method according to claim 38 or 39, wherein the conversation information comprises a verification code, and the action type is filling with the verification code; and
the determining, based on the action type, a candidate item corresponding to the input method comprises:
determining the verification code as the candidate item corresponding to the input method.

43. The method according to claim 38 or 39, wherein the conversation information comprises a to-be-replied text, and the action type is invoking an application used to respond to the to-be-replied text; and
the determining, based on the action type, a candidate item corresponding to the input method comprises:
determining a shortcut entry of the application used to respond to the to-be-replied text, as the candidate item corresponding to the input method.

44. The method according to claim 38 or 39, wherein the conversation information comprises a to-be-replied text, and the action type is invoking a fast reply template; and
the determining, based on the action type, a candidate item corresponding to the input method comprises:
performing semantic parsing on the to-be-replied text to determine a candidate word library, wherein the candidate word library comprises a frequently used reply word; and
determining a preset quantity of words ranking ahead in the candidate word library, as the candidate item corresponding to the input method.

45. The method according to claim 44, wherein after the responding to selection performed by the user on the displayed candidate item, the method further comprises:
determining whether a target word entered by the user is in the candidate word library; and
raising a rank of the target word in the candidate word library when it is determined that the target word entered by the user is in the candidate word library; or
adding the target word to the candidate word library when it is determined that the target word entered by the user is not in the candidate word library.

46. The method according to claim 40 or 41, wherein the target application is a chat application, the conversation information comprises a to-be-replied text, and the action type is extracting content of a source text;
the executing an action corresponding to the action type, and determining information obtained by executing the action as the candidate item corresponding to the input method comprises:
extracting a keyword in the to-be-replied text; and
determining the keyword as the candidate item corresponding to the input method.

47. The method according to claim 40 or 41, wherein the action type is querying data; and
the executing an action corresponding to the action type, and determining information obtained by executing the action as the candidate item corresponding to the input method comprises:
executing a data query action to obtain data corresponding to the conversation information; and
determining the data corresponding to the conversation information as the candidate item corresponding to the input method.

48. The method according to claim 47, wherein the conversation information comprises identification information of the target application and identification information of a search box in the target application; and
the executing a data query action to obtain data corresponding to the conversation information comprises:
querying whether there is a historical search record that is corresponding to the identification information of the target application and the identification information of the search box in the target application; and
when it is determined that there is the historical search record, obtaining a preset quantity of historical search words ranking ahead in the historical search record.

49. The method according to claim 47, wherein the target application is a chat application, and the conversation information comprises identification information of the target application and identification information of a chat object; and
the executing a data query action to obtain data corresponding to the conversation information comprises:
querying whether there are addressing terms that are corresponding to the identification information of the target application and the identification information of the chat object; and
when it is determined that there are the addressing terms, obtaining a preset quantity of addressing terms ranking ahead in the addressing terms.

50. A terminal device, comprising:
a display screen, configured to display an application conversation interface, wherein
the display screen is further configured to display an input method interface; and
the display screen is further configured to display conversation information on the application conversation interface; and
a processor, configured to: respond to the conversation information, and display a candidate item in an input method candidate area of the display screen, wherein the candidate item comprises a candidate word and/or a candidate operation, wherein
the processor is further configured to respond to selection performed by the user on the candidate item.

51. The terminal device according to claim 50, wherein in the aspect of responding to the conversation information, and displaying a candidate item in an input method candidate area of the display screen, the processor is specifically configured to:
parse the conversation information to determine an action type corresponding to the conversation information;
determine, based on the action type, a candidate item corresponding to the input method; and
display the candidate item in the input method candidate area of the display screen.

52. The terminal device according to claim 51, wherein in the aspect of parsing the conversation information to determine an action type corresponding to the conversation information, the processor is specifically configured to:
obtain a keyword in the conversation information; and
determine, based on the keyword and a preset correspondence, the action type corresponding to the conversation information, wherein the correspondence comprises a correspondence between the keyword and the action type.

53. The terminal device according to claim 51 or 52, wherein in the aspect of determining, based on the action type, a candidate item corresponding to the input method, the processor is specifically configured to:
execute an action corresponding to the action type; and
determine information obtained by executing the action as the candidate item corresponding to the input method.

54. The terminal device according to claim 53, wherein in the aspect of executing an action corresponding to the action type, the processor is specifically configured to:
control the display screen to display indication information, wherein the indication information is used by the user to choose whether to trigger the action; and
execute the action when it is determined that the user triggers the action.

55. The terminal device according to claim 51 or 52, wherein the conversation information comprises a verification code, and the action type is filling with the verification code; and
in the aspect of determining, based on the action type, a candidate item corresponding to the input method, the processor is specifically configured to:
determine the verification code as the candidate item corresponding to the input method.

56. The terminal device according to claim 51 or 52, wherein the conversation information comprises a to-be-replied text, and the action type is invoking an application used to respond to the to-be-replied text; and
in the aspect of determining, based on the action type, a candidate item corresponding to the input method, the processor is specifically configured to:
determine a shortcut entry of the application used to respond to the to-be-replied text, as the candidate item corresponding to the input method.

57. The terminal device according to claim 51 or 52, wherein the conversation information comprises a to-be-replied text, and the action type is invoking a fast reply template; and
in the aspect of determining, based on the action type, a candidate item corresponding to the input method, the processor is specifically configured to:
perform semantic parsing on the to-be-replied text to determine a candidate word library, wherein the candidate word library comprises a frequently used reply word; and
determine a preset quantity of words ranking ahead in the candidate word library, as the candidate item corresponding to the input method.

58. The terminal device according to claim 57, wherein after the responding to selection performed by the user on the candidate item, the processor is further configured to:
determine whether a target word entered by the user is in the candidate word library; and
raise a rank of the target word in the candidate word library when it is determined that the target word entered by the user is in the candidate word library; or
add the target word to the candidate word library when it is determined that the target word entered by the user is not in the candidate word library.

59. The terminal device according to claim 53 or 54, wherein the target application is a chat application, the conversation information comprises a to-be-replied text, and the action type is extracting content of a source text; and
in the aspect of executing an action corresponding to the action type, and determining information obtained by executing the action as the candidate item corresponding to the input method, the processor is specifically configured to:
extract a keyword in the to-be-replied text; and
determine the keyword as the candidate item corresponding to the input method.

60. The terminal device according to claim 53 or 54, wherein the action type is querying data; and
in the aspect of executing an action corresponding to the action type, and determining information obtained by executing the action as the candidate item corresponding to the input method, the processor is specifically configured to:
execute a data query action to obtain data corresponding to the conversation information; and
determine the data corresponding to the conversation information as the candidate item corresponding to the input method.

61. The terminal device according to claim 60, wherein the conversation information comprises identification information of the target application and identification information of a search box in the target application; and
in the aspect of executing a data query action to obtain data corresponding to the conversation information, the processor is specifically configured to:
query whether there is a historical search record that is corresponding to the identification information of the target application and the identification information of the search box in the target application; and
when it is determined that there is the historical search record, obtain a preset quantity of historical search words ranking ahead in the historical search record.

62. The terminal device according to claim 60, wherein the target application is a chat application, and the conversation information comprises identification information of the target application and identification information of a chat object; and
in the aspect of executing a data query action to obtain data corresponding to the conversation information, the processor is specifically configured to:
query whether there are addressing terms that are corresponding to the identification information of the target application and the identification information of the chat object; and
when it is determined that there are the addressing terms, obtain a preset quantity of addressing terms ranking ahead in the addressing terms.
